# EUROPEAN PATENT APPLICATION

(11) **EP 4 796 977 A1**
(43) Date of publication of application: **26.08.2026**
(21) Application number: 24898181.3
(22) Date of filing: 29.11.2024
(51) Int. Cl.: G02B 27/01

(54) **HEAD-MOUNTED DEVICE INCLUDING DIAL UNIT**

(30) Priority: 29.11.2023 KR 20230169989; 20.12.2023 KR 20230187438
(71) Applicant: Samsung Electronics Co., Ltd., Suwon-si, Gyeonggi-do 16677 (KR)
(72) Inventor: KANG, Yoonseok, Suwon-si, Gyeonggi-do 16677 (KR)
(74) Representative: Appleyard Lees IP LLP
(86) International application number: PCT/KR2024/019224
(87) International publication number: WO 2025/116587

(57) **Abstract**

The head-mounted device according to an embodiment disclosed in the present document may comprise: a main body; a front case movably coupled to the main body; a dial unit disposed on the front case; a first holding structure disposed on the main body; a second holding structure fastened to the first fixing structure on the basis of a movement of the dial unit in a first direction, and unfastened from the first holding structure on the basis of a movement of the dial unit in a second direction; a wire wound around the dial unit; and a rear band connected to the wire so as to move with respect to the front case on the basis of a rotation of the dial unit. The main body may move in one direction from among a third direction and a fourth direction opposite to the third direction with respect to the front case in a state in which the second holding structure is unfastened from the first holding structure. Various other embodiments are possible.

## Description

### [Technical Field]

Various embodiments disclosed in this document relate to a head-mounted device including a dial unit.

### [Background Art]

As technology advances, electronic devices are evolving beyond conventional rectangular shapes into various forms. For example, electronic devices may include wearable electronic devices configured to be worn on a portion of a user's body. An example of such a wearable electronic device may be a head-mounted device (HMD) configured to be mounted on a user's head and to provide virtual reality images to the user.

The above information may be provided as related art for the purpose of facilitating an understanding of the disclosure. Nothing in the foregoing description should be construed as an admission that any of the above constitutes prior art to the disclosure.

### [Disclosure of Invention]

### [Technical Problem]

A head-mounted device may include a main body configured to provide virtual reality images to a user, a forehead support coupled to the main body and configured to contact a user's forehead, and a rear band coupled to the main body and configured to contact a rear portion of the user's head such that the main body is wearable on the user's face. The user may wear the head-mounted device by adjusting a length of the rear band relative to the forehead support. For example, when a length adjustment dial disposed on the rear band is rotated, a wire may be wound around or unwound from the length adjustment dial to decrease or increase a distance between the rear band and the forehead support. Accordingly, the user may adjust the distance between the rear band and the forehead support to fit the user's head by rotating the length adjustment dial.

The head-mounted device may require a diopter adjustment function to compensate for users with impaired vision. The main body of the head-mounted device may include a plurality of lenses corresponding to a user's left eye and right eye. Diopter adjustment may be achieved by adjusting a distance between the plurality of lenses and the user's eyes. For example, when a diopter adjustment dial disposed on the forehead support is rotated, the forehead support may move relative to the main body. For example, when the diopter adjustment dial is rotated in one direction, the forehead support may move forward relative to the main body, thereby decreasing the distance between the lenses and the user's eyes. When the diopter adjustment dial is rotated in an opposite direction, the forehead support may move rearward relative to the main body, thereby increasing the distance between the lenses and the user's eyes. Accordingly, the distance between the user's eyes and the lenses disposed on the main body may be changed, thereby adjusting a diopter value.

However, when the head-mounted device is worn, user inconvenience may occur due to separate adjustment of the diopter adjustment dial and the length adjustment dial. For example, when both diopter adjustment and rear band length adjustment are required, the rear band may need to be adjusted after diopter adjustment. If this sequence is not followed, problems may arise. For example, when a distance between the forehead support and the rear band is adjusted to fit a user's head using the length adjustment dial, and the diopter adjustment dial is then rotated, the distance between the forehead support and the rear band may change as the forehead support moves relative to the main body. When the forehead support moves forward relative to the main body, the distance between the forehead support and the rear band may increase, which may cause the head-mounted device to slip from the user's head. Alternatively, when the forehead support moves rearward relative to the main body, the distance between the forehead support and the rear band may decrease, which may cause the head-mounted device to exert excessive pressure on the user's head.

Further, the forehead support may include a cushion portion configured to contact the user's forehead. If a curvature of the cushion portion differs from a curvature of the user's forehead, the user's forehead may be supported by the cushion portion only at partial regions, which may reduce wearing comfort of the head-mounted device.

Technical problems to be achieved in the disclosure are not limited to the above-described technical problems, and other technical problems that are not described will be clearly understood by those of ordinary skill in the art to which the disclosure belongs from the description below.

### [Solution to Problem]

According to an embodiment disclosed in this document, a head-mounted device includes a main body; a front case movably coupled to the main body; a dial unit disposed on the front case; a first fixing structure disposed on the main body; a second fixing structure engaged with the first fixing structure based on movement of the dial unit in a first direction and disengaged from the first fixing structure based on movement of the dial unit in a second direction; a wire wound around the dial unit; and a rear band connected to the wire and configured to move relative to the front case based on rotation of the dial unit, wherein the main body is moveable relative to the front case in one of a third direction and a fourth direction opposite to the third direction in a state in which the second fixing structure is disengaged from the first fixing structure.

According to an embodiment disclosed in this document, a fastening structure of a main body and a front case may include a dial unit disposed on the front case and including a hook portion; a latch projection disposed on the front case and engaged with the hook portion as the dial unit moves in a first direction relative to the front case and disengaged from the hook portion as the dial unit moves in a second direction relative to the front case; a first fixing structure disposed on the main body; and a second fixing structure engaged with the first fixing structure based on movement of the dial unit in the first direction and disengaged from the first fixing structure based on movement of the dial unit in the second direction.

### [Advantageous Effects of Invention]

According to embodiments of the disclosure, both a diopter and a length of a rear band relative to a forehead support (e.g., front case) can be adjusted using a single dial unit. According to an embodiment, when the length of the rear band relative to the forehead support is adjusted through the dial unit, a distance between the forehead support and the rear band can remain unchanged even during diopter adjustment, thereby maintaining a wearing state of the head-mounted device. For example, during diopter adjustment, the distance between the forehead support and the rear band can remain unchanged even when the main body moves forward or rearward relative to the forehead support.

Further, according to an embodiment of the disclosure, a cushion portion disposed on the forehead support can be deformable according to a user's head shape. Accordingly, a user can more comfortably wear the head-mounted device.

Effects that can be obtained from the disclosure are not limited to the above-described effects, and other effects that are not described will be clearly understood by those of ordinary skill in the art to which the disclosure belongs from the description below.

### [Brief Description of Drawings]

In connection with the description of the drawings, the same or similar reference numerals may be used for the same or similar components.
FIG. 1 is an exploded perspective view illustrating a head-mounted device according to an embodiment of the disclosure.
FIGS. 2A and 2B are diagrams illustrating movement of a main body relative to a front case in a state in which a dial unit moves in a second direction relative to the front case and fixing structures are disengaged according to an embodiment of the disclosure.
FIG. 3 is a diagram illustrating a cushion portion divided and disposed on one surface of a front case according to an embodiment of the disclosure.
FIG. 4A is a rear perspective view illustrating a dial unit according to an embodiment of the disclosure.
FIGS. 4B and 4C are exploded perspective views illustrating a dial unit according to an embodiment of the disclosure.
FIG. 5A is a diagram illustrating a structural linkage relationship between a first wheel structure, a second wheel structure, and a third wheel structure according to an embodiment of the disclosure.
FIG. 5B is a diagram illustrating a structural linkage relationship between a first wheel structure and a third wheel structure according to an embodiment of the disclosure.
FIGS. 6A, 6B, and 6C are diagrams illustrating a connection relationship between a wire and a first wheel structure according to an embodiment of the disclosure.
FIG. 7 is a diagram illustrating a dial unit and a rear band connected via a wire according to an embodiment of the disclosure.
FIGS. 8A, 8B, 8C and 8D are diagrams illustrating movement of a main body relative to a front case in a state in which a dial unit moves in a second direction relative to the front case and fixing structures are disengaged according to an embodiment of the disclosure.
FIGS. 9A, 9B, 9C, and 9D are diagrams illustrating a state in which a first fixing structure and a second fixing structure are fastened as a dial unit moves in a first direction according to an embodiment of the disclosure.
FIG. 10A is a diagram illustrating a state in which a main body may move relative to a front case as a protrusion formed on an actuator of a dial unit is disengaged from an engagement groove of a fixing plate according to an embodiment of the disclosure.
FIG. 10B is a diagram illustrating a state in which a protrusion formed on an actuator of a dial unit is engaged with an engagement groove of a fixing plate according to an embodiment of the disclosure.

### [Mode for the Invention]

In the following description, various embodiments of this document are described with reference to the attached drawings. It should be understood that various embodiments of this document and terms used therein are not intended to limit the technical features described in this document to specific embodiments, but include various modifications, equivalents, or substitutions of the embodiments.

In connection with the description of the drawings, like reference numerals may be used for similar or related components. The singular form of the noun corresponding to the item may include one or more of the item, unless the relevant context clearly dictates otherwise.

In this document, each of phrases such as "A or B", "at least one of A and B", "at least one of A or B", "A, B, or C", "at least one of A, B, and C", and "at least one of A, B, or C" may include any one of or all possible combinations of items listed together in the corresponding one of the phrases. Terms such as "first" or "second" may be simply used for distinguishing a corresponding component from other corresponding components, and do not limit the corresponding components in other aspects (e.g., importance or order). In the case that one (e.g., first) component is referred to as "coupled" or "connected" to another (e.g., second) component, with or without the terms "functionally" or "communicatively", it means that the one component may be connected to the other component directly (e.g., by wire), wirelessly, or through a third component.

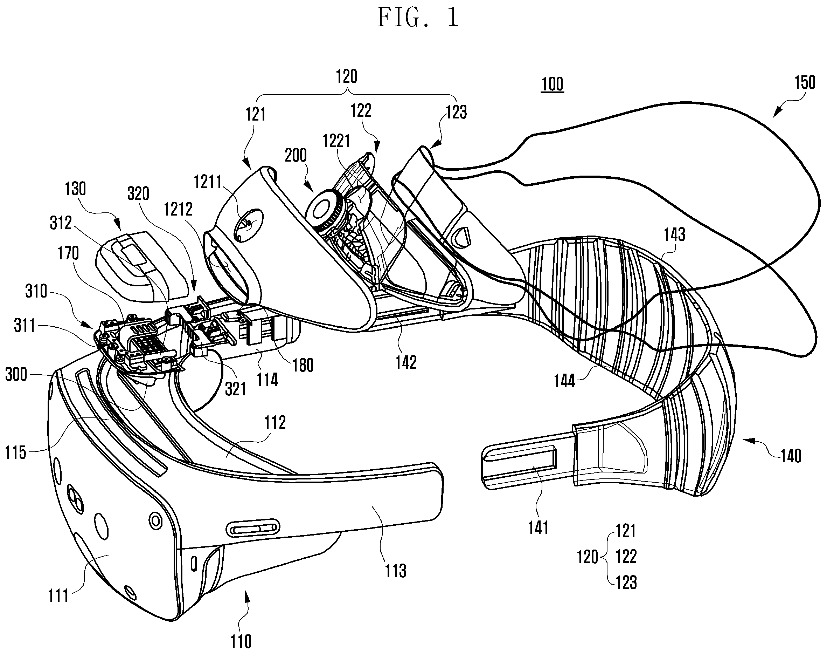

FIG. 1 is an exploded perspective view illustrating a head-mounted device according to an embodiment of the disclosure.

According to an embodiment, as illustrated in FIG. 1, a head-mounted device 100 may provide at least one of a see-through function that provides augmented reality (AR) or a see-closed function that provides virtual reality (VR) through a display. The see-through function may be a function of providing an object, a virtual object, or a real object to a user using visual or various sensory means while transmitting real external objects to the user's eyes through a display (not illustrated) or a transparent or translucent lens (not illustrated). According to the see-through function, additional information and/or images related to real objects may be provided to the user. In an embodiment, the see-through function may provide additional information to the user using holograms without a display or lens. In an embodiment, the see-closed function may be provided by a separate display disposed in front of the user's eyes, such that the user may view content (games, movies, streaming, and/or broadcasts) provided through the display. This may provide immersion to the user through an independent screen.

According to an embodiment, as illustrated in FIG. 1, the head-mounted device 100 may include a main body 110, a front case 120, a cover member 130, a rear band 140, a wire 150 configured to adjust a length between the front case 120 and the rear band 140, and/or a dial unit 200. At least one of the above-described components may be omitted, or at least one component may be added.

In an embodiment, with reference to FIG. 1, the main body 110 may include a body portion 111 of the head-mounted device 100. In an embodiment, the main body 110 may include a display configured to provide a virtual reality image to a user and/or a plurality of lenses interposed between the display and the user's eyes. In an embodiment, the plurality of lenses may be positioned to correspond to the user's two eyes.

In an embodiment, the main body 110 may include a body portion 111 exposed to the outside of the head-mounted device 100, a vent hole 115 formed in the body portion 111, a face contact portion 112 worn on the user's face, a first bridge 113 coupled to a first side portion 141 of the rear band 140, and a second bridge 114 coupled to a second side portion 142 of the rear band 140.

In an embodiment, at least one of a display or a lens of the head-mounted device 100 may be located in the body portion 111. Heat generated during operation of the head-mounted device 100 may be discharged from the inside of the head-mounted device 100 to the outside through the vent hole 115 formed in the body portion 111.

In an embodiment, the face contact portion 112 may be formed to have at least a partially curved shape corresponding to the user's face. In an embodiment, the face contact portion 112 may have an outer shape that covers the user's eyes. In an embodiment, the face contact portion 112 may include a nose recess configured to accommodate the user's nose.

In an embodiment, with reference to FIG. 1, the front case 120 may be a portion that contacts the user's forehead. In an embodiment, the front case 120 may include a front cover 121 and cushion assemblies 122 and 123. In an embodiment, the front cover 121 may be a cover that forms the exterior of the front case 120. In an embodiment, the cushion assemblies 122 and 123 may be coupled to the front cover 121 and be configured to be contact the user's forehead. In an embodiment, the cushion assemblies 122 and 123 may include a cushion portion 123 configured to contact the user's forehead (or face) and a support member 122 configured to support the cushion portion 123. In an embodiment, the cushion portion 123 may be formed of an elastic material to provide wearing comfort to the user. For example, the cushion portion 123 may be formed of polyurethane. In an embodiment, the support member 122 may be formed of a metal or non-metal material having a predetermined level of rigidity to support the cushion portion 123.

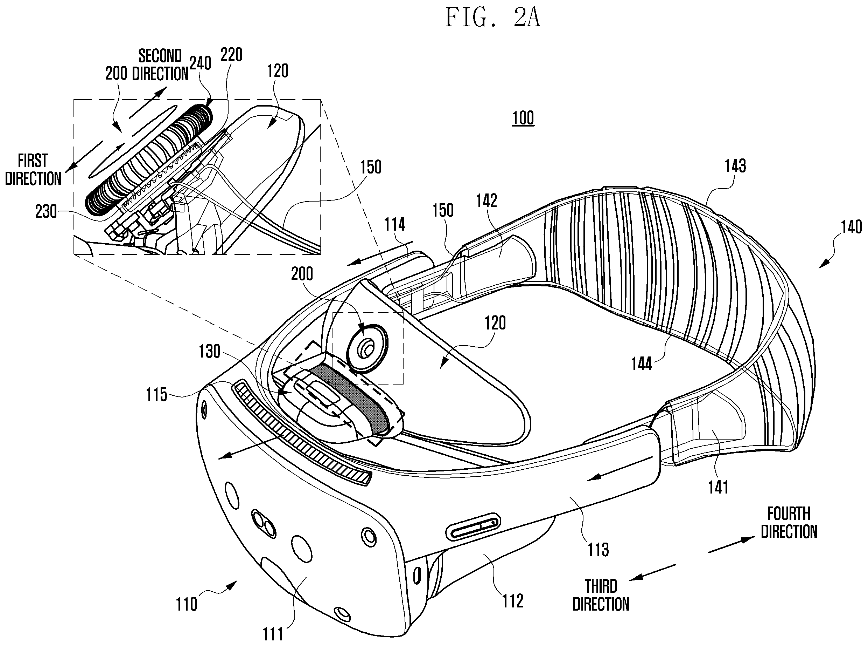

In an embodiment, with reference to FIG. 1, the head-mounted device 100 may include a dial unit 200. In an embodiment, the dial unit 200 may be disposed in the front case 120. In an embodiment, at least a portion of the dial unit 200 may pass through a first opening 1211 formed in the front cover 121 and be disposed in a mounting groove 1221 formed in the support member 122. In an embodiment, the mounting groove 1221 of the support member 122 may be open in a first direction to allow the dial unit 200 to move in the first direction (e.g., the first direction of FIG. 2A), as described below.

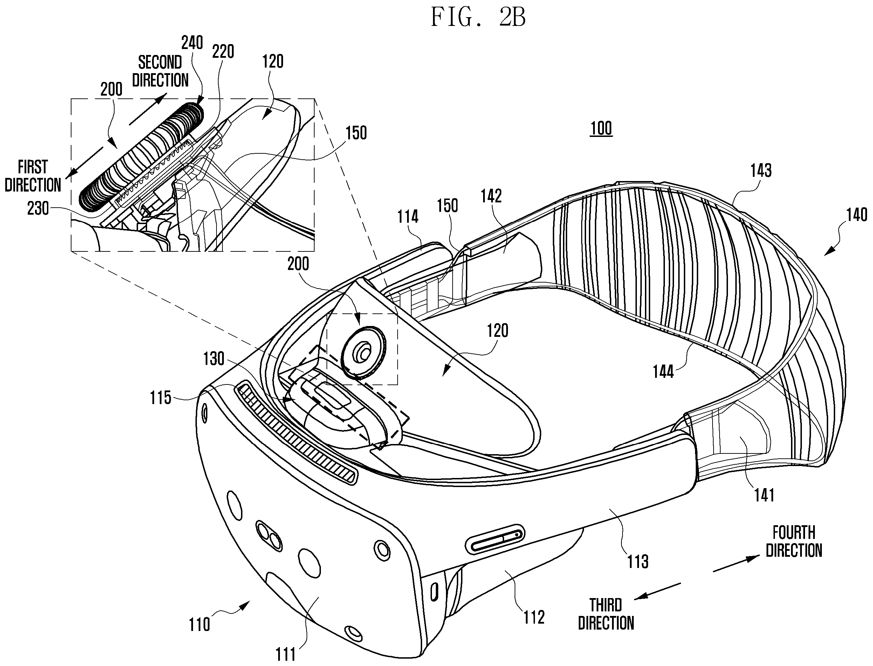

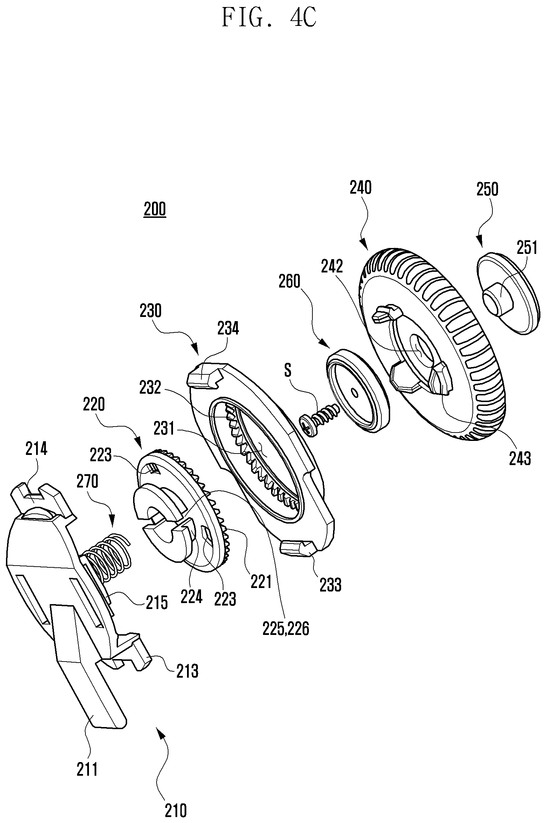

In an embodiment, a user may adjust a gap between the front case 120 and the rear band 140 by operating the dial unit 200. For example, with reference to FIGS. 2A and 2B described below, the user may rotate the dial unit 200 clockwise or counterclockwise relative to the front case 120 to wind or unwind the wire 150 connected to the rear band 140 around a winding portion 224 of the dial unit 200 (e.g., a winding portion 224 of a first wheel structure 220 of FIG. 4C). Accordingly, the gap between the front case 120 and the rear band 140 may be adjusted to fit the user's head.

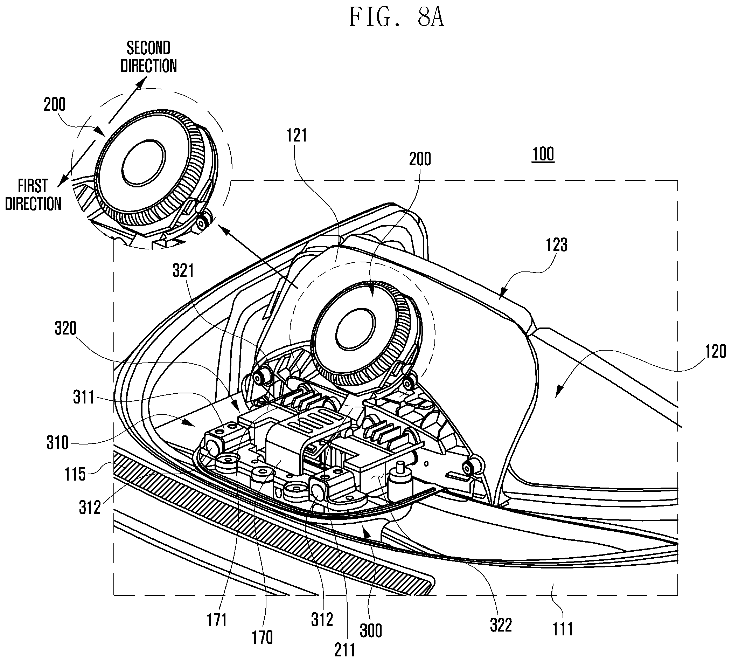

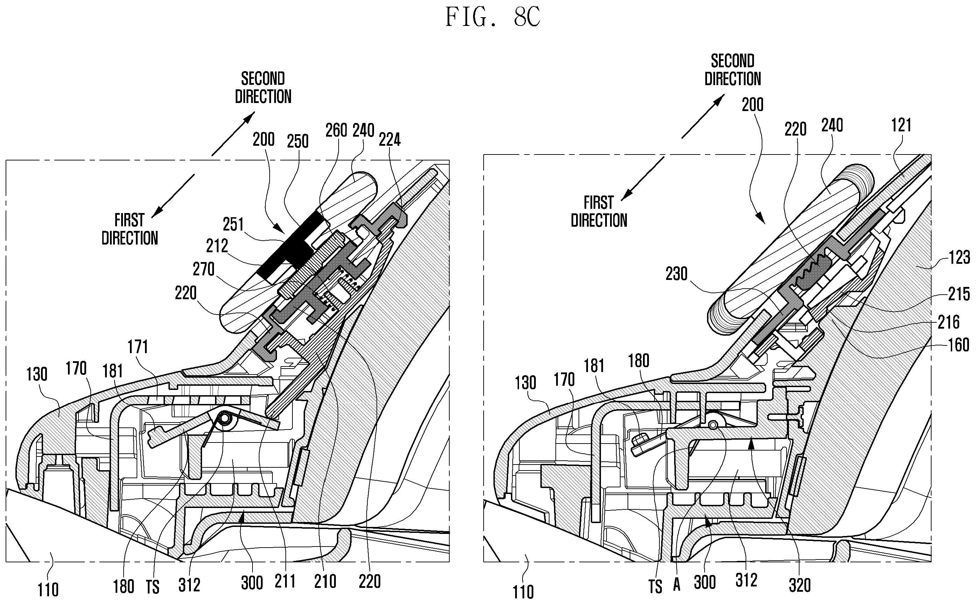

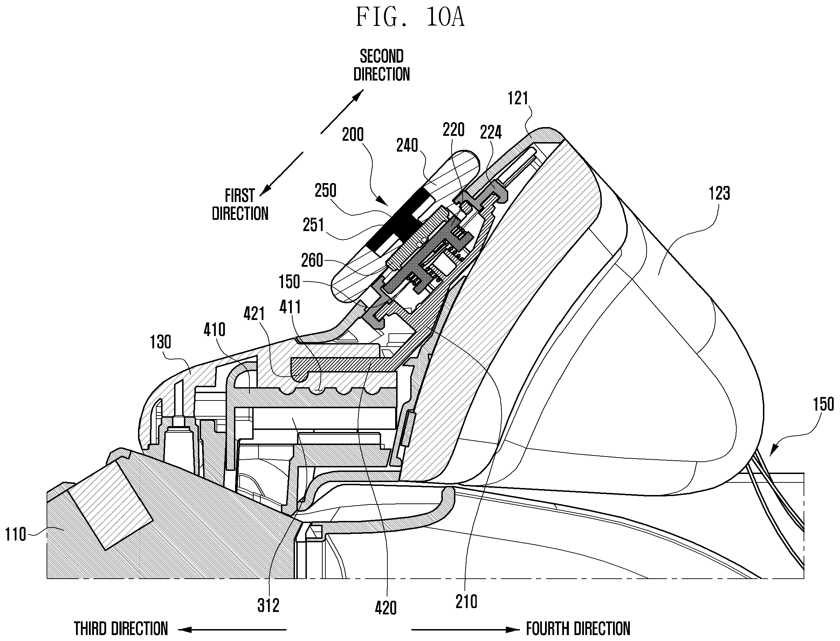

In an embodiment, the head-mounted device 100 may include a diopter adjustment function to compensate for impaired vision. A diopter refers to a refractive power of a lens and may correspond to an inverse of a focal length. A user with impaired vision may correct vision by adjusting the diopter through moving the main body 110, on which one or more lenses are disposed, relative to the front case 120. In an embodiment, the user may move the main body 110 relative to the front case 120 by operating the dial unit 200. As described below with reference to FIG. 8C, when the dial unit 200 moves in a second direction (e.g., a second direction of FIG. 8C) relative to the front case 120 such that a second fixing structure (e.g., a link member 180 of FIG. 8C or a protrusion 421 of FIG. 10A) is disengaged from a first fixing structure (e.g., a fixing portion 170 of FIG. 8C or a fixing plate 410 of FIG. 10A), the main body 110 may move in a third direction (e.g., a third direction of FIG. 2A) or a fourth direction (e.g., a fourth direction of FIG. 2A) relative to the front case 120. In an embodiment, the third direction may be a forward direction of the main body 110 relative to the front case 120. In an embodiment, the fourth direction may be a rearward direction of the main body 110 relative to the front case 120. The user may adjust the diopter by moving the main body 110 relative to the front case 120 to adjust a distance between the lens(es) disposed on the main body 110 and the user's eyes.

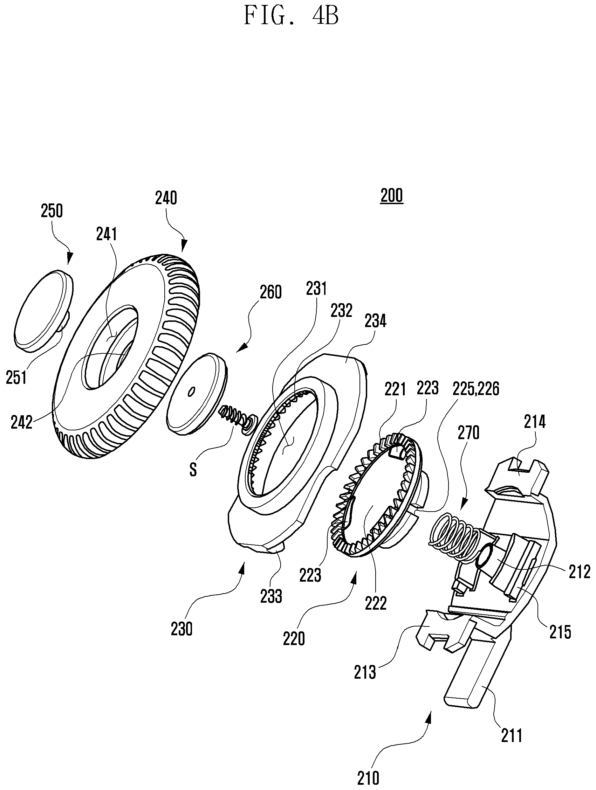

In an embodiment, the dial unit 200 may be coupled to the wire 150. In an embodiment, the wire 150 may be wound around or unwound from the winding portion 224 of the dial unit 200 as a component of the dial unit 200 (e.g., a first wheel structure 220 or a third wheel structure 240 of FIG. 4B) rotates clockwise or counterclockwise. For example, the user may rotate the third wheel structure 240 of FIG. 4C, disposed on the front cover 121, clockwise or counterclockwise to rotate the first wheel structure 220 operatively connected to the third wheel structure 240 clockwise or counterclockwise. Accordingly, the wire 150 may be wound around or unwound from the winding portion 224 formed on the first wheel structure 220. A distance between the rear band 140 and the front case 120 may change according to a degree to which the wire 150 is wound around the winding portion 224 of the dial unit 200.

In an embodiment, with reference to FIG. 1, the main body 110 may be movably coupled to the front case 120. In an embodiment, the main body 110 may move relative to the front case 120 through sliding coupling between a first guide unit 310 and a second guide unit 320. In an embodiment, the first guide unit 310 may include a shaft 312 extending in one direction, and the second guide unit 320 may include a guide groove 322 into which the shaft 312 is inserted. For example, the guide groove 322 formed in a portion of the second guide unit 320 (e.g., a second guide member 321) may receive the shaft 312 of the first guide unit 310. Accordingly, the first guide unit 310 and the second guide unit 320 may move along an extension direction of the shaft 312 (e.g., the third direction or the fourth direction). In an embodiment, the second guide unit 320 may include the shaft 312, and the first guide unit 310 may include the guide groove 322.

In an embodiment, the first guide unit 310 may be disposed in one of the main body 110 and the front case 120. The second guide unit 320 may be disposed in the other of the main body 110 and the front case 120. In an embodiment, with reference to FIG. 1, the first guide unit 310 may be disposed on the main body 110. The second guide unit 320 may be disposed on the front case 120 and coupled to the shaft 312 of the first guide unit 310. Conversely, the first guide unit 310 may be disposed on the front case 120, and the second guide unit 320 may be disposed on the main body 110. In the following description, it is assumed that the first guide unit 310 is disposed on the main body 110 and the second guide unit 320 is disposed on the front case 120, as illustrated in FIG. 1. However, the following description may be equally applied to an embodiment in which the first guide unit 310 is disposed on the front case 120 and the second guide unit 320 is disposed on the main body 110.

In an embodiment, with reference to FIG. 1, the first guide unit 310 may be disposed on a support bracket 300, which may be disposed on the main body 110. In an embodiment, the support bracket 300 may be configured to connect the first guide unit 310 to the main body 110. In an embodiment, the first guide unit 310 may be disposed on the main body 110 by the support bracket 300 being disposed in a mounting groove (not illustrated) formed in the main body 110.

In an embodiment, the first guide unit 310 and the second guide unit 320 may be protected from external impact by being covered by the cover member 130. In an embodiment, the cover member 130 may cover the first guide unit 310 and the second guide unit 320 and be inserted into a second opening 1212 formed in the front cover 121. In an embodiment, at least a portion of the cover member 130 may be coupled to the first guide unit 310 and/or the support bracket 300. Accordingly, when the first guide unit 310 and the second guide unit 320 move relative to each other in the third or the fourth direction via the shaft 312, the cover member 130 may move together with the first guide unit 310 relative to the second guide unit 320 and be inserted into or withdrawn from the second opening 1212.

FIGS. 2A and 2B are diagrams illustrating movement of a main body relative to a front case in a state in which a dial unit moves in a second direction relative to the front case and fixing structures are disengaged according to an embodiment of the disclosure.

According to an embodiment, as illustrated in FIGS. 2A and 2B, the main body 110 and the front case 120 may move linearly relative to each other in a third direction (e.g., the third direction of FIG. 2A) or in a fourth direction (e.g., the fourth direction of FIG. 2A) opposite to the third direction via the first guide unit 310 and the second guide unit 320. In an embodiment, from a perspective of a user wearing the head-mounted device 100, the front case 120 may be fixed, and the main body 110 may move in the third direction and the fourth direction relative to the front case 120. In the following description, from the perspective of the user, the front case 120 may be fixed, and the main body 110 may move in the third direction or the fourth direction relative to the front case 120.

According to an embodiment, as illustrated in FIGS. 2A and 2B, the cover member 130 may be inserted into or withdrawn from the second opening 1212 of the front cover 121 as the main body 110 moves in the third direction or the fourth direction relative to the front case 120. For example, with reference to FIG. 2A, when the user moves the main body 110 in the third direction relative to the front case 120, the first guide unit 310 may move in the third direction relative to the second guide unit 320. In this case, a portion of the cover member 130 inserted into the second opening 1212 of the front cover 121 may be withdrawn from the second opening 1212. With reference to FIG. 2B, when the user moves the main body 110 in the fourth direction relative to the front case 120, the first guide unit 310 may move in the fourth direction relative to the second guide unit 320. In this case, a portion of the cover member 130 may be inserted into the second opening 1212 of the front cover 121.

In an embodiment, the main body 110 may be movable relative to the front case 120 according to whether a first fixing structure (e.g., the fixing portion 170 of FIG. 8C or the fixing plate 410 of FIG. 10A) and a second fixing structure (e.g., the link member 180 of FIG. 8C or the protrusion 421 of FIG. 10A) are engaged with each other. In an embodiment, at least a portion of the first fixing structure may be disposed on the main body 110. The second fixing structure may be engaged with the first fixing structure as the dial unit 200 moves in a first direction (e.g., the first direction of FIG. 2A) relative to the front case 120. In an embodiment, the first fixing structure may include a fixing portion 170 (e.g., the fixing portion 170 of FIG. 8A) and a fixing plate 410 (e.g., the fixing plate 410 of FIG. 10A), which will be described below. In an embodiment, the second fixing structure may include a link member 180 (e.g., the link member 180 of FIG. 8A) and a protrusion (e.g., the protrusion 421 of FIG. 10A).

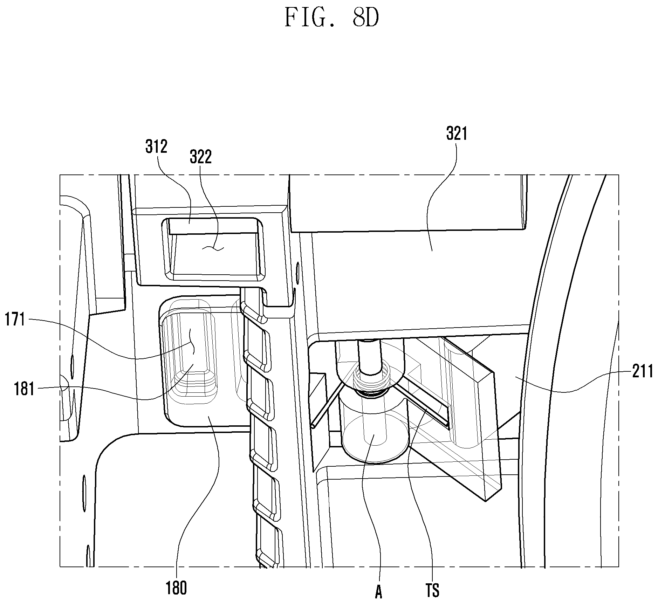

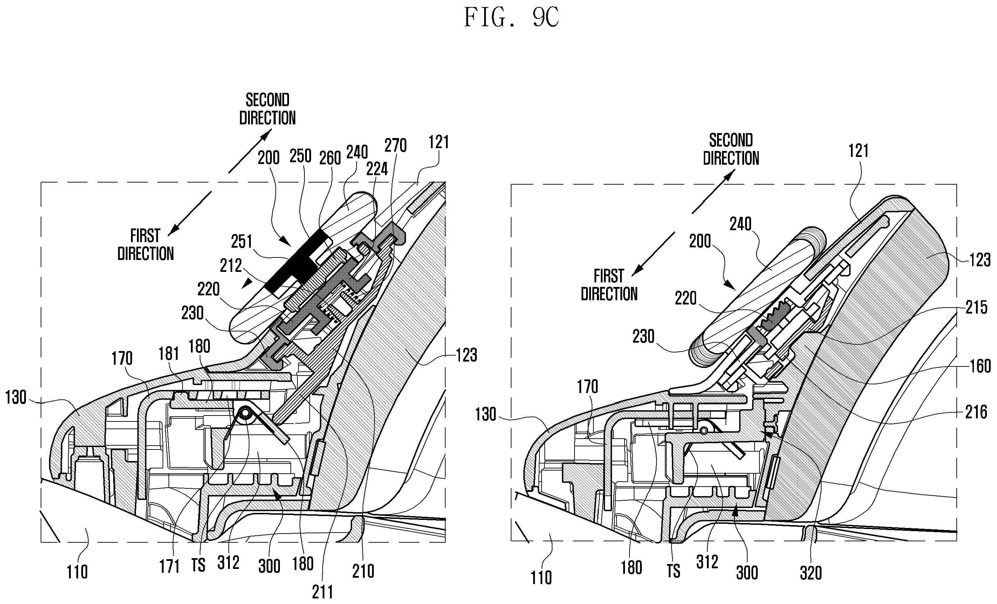

In an embodiment, when the dial unit 200 moves in a first direction relative to the front case 120, the first fixing structure and the second fixing structure may be engaged with each other. For example, with reference to FIG. 9C described below, when the dial unit 200 moves in the first direction, an actuator 211 of the dial unit 200 may press the link member 180 disposed in the second guide unit 320. In an embodiment, the link member 180 may be inserted into an axis A of the second guide unit 320 (e.g., an axis A of the second guide member 321 of FIG. 8D) to be rotatable. The link member 180 may rotate clockwise with respect to FIG. 9C by the actuator 211 such that a stopper 181 of the link member 180 may be inserted into an engagement groove 171 of a fixing portion 170 disposed in the first guide unit 310. As the stopper 181 of the link member 180 is engaged with the engagement groove 171 of the fixing portion 170, movement of the first guide unit 310 relative to the second guide unit 320 in the third direction or the fourth direction may be restricted. Accordingly, the main body 110 may be fixed in position relative to the front case 120. When the dial unit 200 moves in the first direction relative to the front case 120, a hook portion 215 of the dial unit 200 may be engaged with a latch projection 160 disposed inside the front case 120. Accordingly, the dial unit 200 may be fixed to the front case 120. Further, because the dial unit 200 in contact with the link member 180 is fixed relative to the front case 120 in a state in which the stopper 181 of the link member 180 is inserted into the engagement groove 171 of the fixing portion 170, the front case 120 may also be fixed in position relative to the main body 110.

In an embodiment, when the dial unit 200 moves in a second direction (e.g., the second direction of FIG. 2A) relative to the front case 120, the second fixing structure may be disengaged from the first fixing structure. For example, with reference to FIG. 8C described below, when the user moves the dial unit 200 in the second direction in a state in which a hook portion 215 of the dial unit 200 is engaged with the latch projection 160 disposed inside the front case 120, the hook portion 215 of the dial unit 200 may be disengaged from the latch projection 160. As the dial unit 200 moves in the second direction, the link member 180 may rotate counterclockwise with respect to FIG. 8C. Through rotation of the link member 180, the stopper 181 of the link member 180 may be disengaged from the engagement groove 171 of the fixing portion 170. As engagement between the link member 180 and the fixing portion 170 is disengaged, the first guide unit 310 may become movable relative to the second guide unit 320 in the third direction or the fourth direction. Accordingly, in a state in which the dial unit 200 has moved in the second direction, the user may move the main body 110 in the third direction or the fourth direction relative to the front case 120. The user may adjust the diopter by adjusting a distance between the lens disposed on the main body 110 and the user's eye by moving the main body 110 relative to the front case 120. After the diopter is optimally adjusted, the user may move the dial unit 200 in the first direction to fix a position of the main body 110 relative to the front case 120.

According to an embodiment, as illustrated in FIGS. 2A and 2B, the user may adjust a gap between the front case 120 and the rear band 140 by operating the dial unit 200. For example, the user may rotate a component of the dial unit 200 (e.g., the first wheel structure 220 or the third wheel structure 240) clockwise or counterclockwise relative to the front case 120 to wind or unwind the wire 150 connected to the rear band 140 around the winding portion 224 of the dial unit 200 (e.g., the winding portion 224 of the first wheel structure 220 of FIG. 4C). A distance between the rear band 140 and the front case 120 may change according to a degree to which the wire 150 is wound around the winding portion 224 of the dial unit 200. For example, as the wire 150 is wound around the winding portion 224 of the dial unit 200, the gap between the rear band 140 and the front case 120 may decrease. Conversely, as the wire 150 is unwound from the winding portion 224 of the dial unit 200, the gap between the rear band 140 and the front case 120 may increase.

In an embodiment, the rear band 140 may include a first side portion 141 and a second side portion 142 coupled to the first bridge 113 and the second bridge 114 of the main body 110, respectively. In an embodiment, the first side portion 141 may be slidably coupled to the first bridge 113. The second side portion 142 may be slidably coupled to the second bridge 114. Accordingly, the first side portion 141 and the second side portion 142 of the rear band 140 may slide relative to the first bridge 113 and the second bridge 114 of the main body 110 according to a degree to which the wire 150 is wound around the winding portion 224 of the dial unit 200.

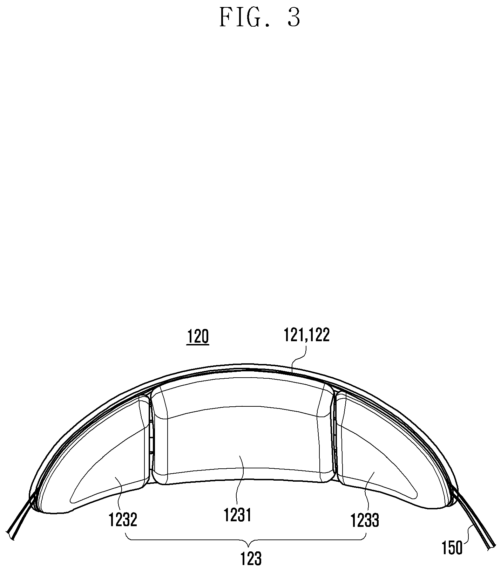

FIG. 3 is a diagram illustrating a cushion portion divided and disposed on one surface of a front case according to an embodiment of the disclosure.

According to an embodiment, as illustrated in FIG. 3, the cushion portion 123 may include at least three cushion portions. In an embodiment, the cushion portion 123 may include a first cushion portion 1231, a second cushion portion 1232, and a third cushion portion 1233. In an embodiment, the second cushion portion 1232 and the third cushion portion 1233 may be positioned on opposite sides of the first cushion portion 1231. The plurality of cushion portions 123 may closely contact the user's forehead according to the user's head shape. Accordingly, as the plurality of cushion portions 123 stably support the user's forehead, the user may more comfortably wear the head-mounted device 100.

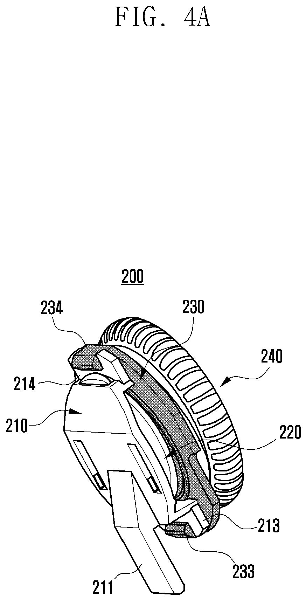

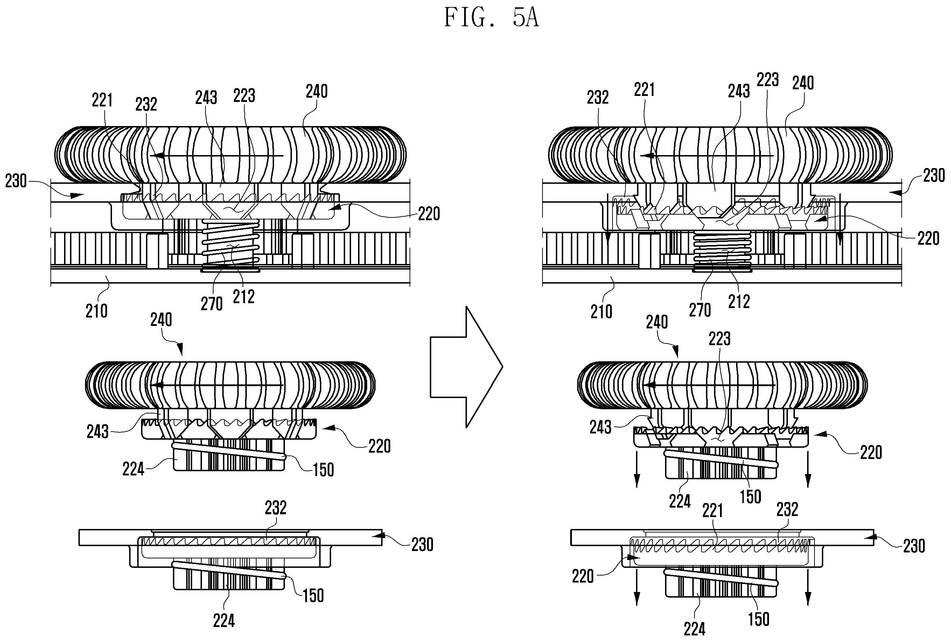

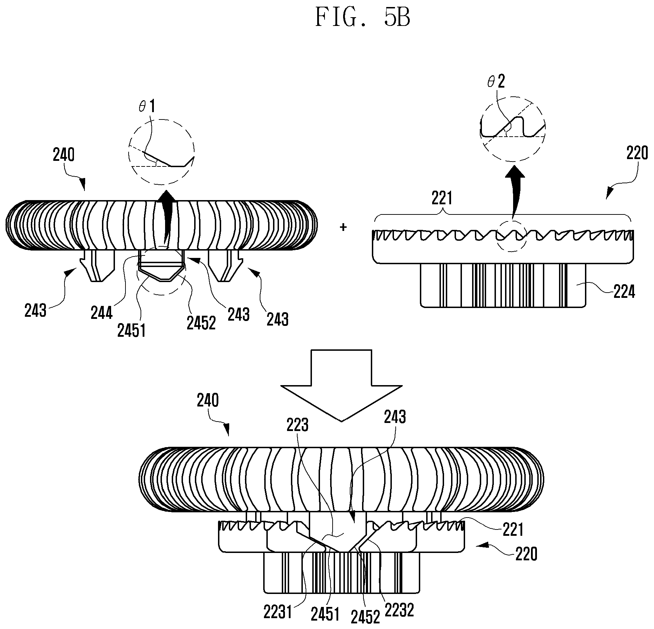

FIG. 4A is a rear perspective view illustrating a dial unit according to an embodiment of the disclosure. FIGS. 4B and 4C are exploded perspective views illustrating a dial unit according to an embodiment of the disclosure. FIG. 5A is a diagram illustrating a structural linkage relationship between a first wheel structure, a second wheel structure, and a third wheel structure according to an embodiment of the disclosure. FIG. 5B is a diagram illustrating a structural linkage relationship between a first wheel structure and a third wheel structure according to an embodiment of the disclosure.

According to an embodiment, as illustrated in FIGS. 4A, 4B, and 4C, the dial unit 200 may include a base member 210, a first wheel structure 220, a second wheel structure 230, a third wheel structure 240, a first button member 250, a second button member 260, and an elastic member 270. At least one of the above-described components may be omitted or other components may be added. In an embodiment, the dial unit 200 may be assembled in the following order: the base member 210, the elastic member 270, the first wheel structure 220, the second wheel structure 230, the second button member 260, the first wheel structure 220, and the first button member 250.

In an embodiment, the base member 210 may be a body 244 that supports the structure of the dial unit 200. In an embodiment, with reference to FIGS. 4A to 4C, the base member 210 may include an actuator 211 protruding in one direction, a detachment prevention portion 212, a first fastening portion 213, a second fastening portion 214, and a hook portion 215.

In an embodiment, with reference to FIG. 9C described below, the actuator 211 may be configured to contact the link member 180. In an embodiment, with reference to FIG. 10A, the actuator 420 may be formed such that at least a portion thereof is parallel to the fixing plate 410. In an embodiment, as the dial unit 200 moves in a third direction (e.g., the third direction of FIG. 2A) relative to the front case 120, the link member 180 may rotate clockwise with respect to FIG. 9C via the actuator 211. For example, the stopper 181 of the link member 180 may be engaged with the engagement groove 171 of the fixing portion 170.

In an embodiment, with reference to FIGS. 4A to 4C, the detachment prevention portion 212 may be configured to receive the elastic member 270 disposed between the base member 210 and the first wheel structure 220. The elastic member 270 may be inserted into the detachment prevention portion 212 to prevent detachment thereof from the base member 210.

In an embodiment, with reference to FIGS. 4A to 4C, the base member 210 may be coupled to the second wheel structure 230 via the first fastening portion 213 and the second fastening portion 214. For example, the second wheel structure 230 may include a first coupling portion 233 coupled to the first fastening portion 213 and a second coupling portion 234 coupled to the second fastening portion 214. In an embodiment, the first coupling portion 233 and the second coupling portion 234 of the second wheel structure 230 may be formed in a hook shape.

In an embodiment, the hook portion 215 of the dial unit 200 may be configured to secure the dial unit 200 to the front case 120. For example, with reference to FIG. 9C described below, when the dial unit 200 moves in a first direction (e.g., a first direction of FIG. 9C) relative to the front case 120, the hook portion 215 of the dial unit 200 may be engaged with the latch projection 160 located inside the front case 120. Accordingly, the dial unit 200 may be secured to the front case 120.

In an embodiment, the hook portion 215 of the dial unit 200 may include an inclined surface 216 inclined at a predetermined angle. For example, with reference to FIGS. 8C and 9C described below, the inclined surface 216 of the hook portion 215 may be formed as an upwardly inclined surface with respect to a second direction (e.g., the second direction of FIG. 8C). Accordingly, when the hook portion 215 of the dial unit 200 is engaged with the latch projection 160 disposed inside the front case 120 and the user moves the dial unit 200 in the second direction, the hook portion 215 of the dial unit 200 may slide along the inclined surface 216 and be disengaged from the latch projection 160.

In an embodiment, with reference to FIGS. 4A to 4C, the first wheel structure 220 may be disposed on the upper side of the base member 210. In an embodiment, the first wheel structure 220 may include a winding portion 224 around which the wire 150 is wound, a first gear 221 configured to mesh with a second gear 232 of the second wheel structure 230, and a coupling groove 223 configured to receive a rib 243 of the first wheel structure 220.

In an embodiment, with reference to FIGS. 4A to 4C, the second wheel structure 230 may be positioned at least partially on an upper end of the first wheel structure 220. In an embodiment, the second wheel structure 230 may include an opening 231 configured to receive a portion of the first wheel structure 220. In an embodiment, the coupling groove 223 of the first wheel structure 220 may be positioned within the opening 231 of the second wheel structure 230. In an embodiment, the second gear 232 may be formed along an outer periphery of the opening 231.

In an embodiment, with reference to FIGS. 4A to 4C, the third wheel structure 240 may be positioned at least partially on an upper end of the second wheel structure 230. In an embodiment, the rib 243 of the third wheel structure 240 may pass through the opening 231 of the second wheel structure 230 and be engaged with the coupling groove 223 of the first wheel structure 220.

In an embodiment, with reference to FIGS. 4A to 4C, button members (e.g., a first button member 250 and a second button member 260) may be disposed on the third wheel structure 240. In an embodiment, the first button member 250 may be disposed on the third wheel structure 240. In an embodiment, the first button member 250 may be positioned in an opening 241 formed on an upper surface of the third wheel structure 240. In an embodiment, the second button member 260 may be disposed on a lower surface of the third wheel structure 240. In an embodiment, at least a portion of the second button member 260 may be positioned in the opening 231 of the second wheel structure 230. In an embodiment, the second button member 260 may contact the first wheel structure 220 through the opening 231 of the second wheel structure 230. In an embodiment, the first button member 250 and the second button member 260 may be fixed by a fixing member (e.g., screw S).

In an embodiment, the first button member 250 may include a protruding portion 251 extending from one surface thereof. In an embodiment, the protruding portion 251 may pass through a hole 242 disposed in the opening 241 of the third wheel structure 240 and contact the second button member 260. In an embodiment, the fixing member S may pass through the second button member 260, the hole 242 disposed in the opening 241 of the third wheel structure 240, and the protruding portion 251.

According to an embodiment, as illustrated in FIG. 5A, the first wheel structure 220, the second wheel structure 230, and the third wheel structure 240 may be operatively coupled to one another.

In an embodiment, the base member 210 and the second wheel structure 230 may be fixed relative to the first wheel structure 220 and the third wheel structure 240. In an embodiment, the first wheel structure 220 and the third wheel structure 240 may be movable relative to the base member 210 and/or the second wheel structure 230. In an embodiment, the third wheel structure 240 may be positioned outside the front case 120. The user may adjust a length between the rear band 140 and the front case 120 by rotating the third wheel structure 240 clockwise or counterclockwise relative to the base member 210 and the second wheel structure 230. For example, when the third wheel structure 240 is rotated counterclockwise, the wire 150 may be wound around the winding portion 224 of the third wheel structure 240, thereby reducing a distance between the front case 120 and the rear band 140. Further, when the third wheel structure 240 is rotated clockwise, the wire 150 may be unwound from the winding portion 224 of the third wheel structure 240, thereby increasing the distance between the front case 120 and the rear band 140. For convenience of description, it is assumed that when the first wheel structure and the third wheel structure are rotated counterclockwise, the wire 150 is wound around the winding portion 224 of the first wheel structure, and when the first wheel structure and the third wheel structure are rotated clockwise, the wire 150 is unwound from the winding portion 224.

In an embodiment, with reference to FIG. 5A, when the third wheel structure 240 rotates clockwise or counterclockwise relative to the base member 210, the first wheel structure 220 may rotate in the same direction as the third wheel structure 240 and move downward relative to the second wheel structure 230. For example, when the third wheel structure 240 rotates clockwise or counterclockwise, the rib 243 of the third wheel structure 240 may contact inclined surfaces (e.g., a second-1 inclined surface 2231 and a second-2 inclined surface 2232) positioned in the coupling groove 223. When the third wheel structure 240 rotates, the first wheel structure 220 may rotate in the same direction as the third wheel structure 240 as the rib 243 contact the inclined surfaces (e.g., the second-1 inclined surface 2231, the second-2 inclined surface 2232) formed in the coupling groove 223. Accordingly, the wire 150 may be wound around or unwound from the winding portion 224 as the first wheel structure 220 rotates in the same direction as the third wheel structure 240. Based on rotation of the third wheel structure 240, the rib 243 may move along the inclined surfaces 2231 and 2232 positioned on the coupling groove 223 and be positioned on one surface (e.g., flat surface) 222 of the first wheel structure 220 in which the coupling groove 223 is formed. As the surface 222 is pressed by the rib 243, the first wheel structure 220 may move downward relative to the second wheel structure 230.

In an embodiment, with reference to FIG. 5A, when the rib 243 of the third wheel structure 240 is inserted into the coupling groove 223 of the first wheel structure 220, the first gear 221 of the first wheel structure 220 and the second gear 232 of the second wheel structure 230 may be engaged with each other. When the first gear 221 and the second gear 232 are engaged, the first wheel structure 220 may be fixed. In an embodiment, when the third wheel structure 240 rotates clockwise or counterclockwise, the surface 222 of the first wheel structure 220 may be pressed by the rib 243. As the surface 222 is pressed by the rib 243, the first wheel structure 220 may move away from the second wheel structure 230. In this case, the elastic member 270 may be compressed between the first wheel structure 220 and the base member 210. The first gear 221 of the first wheel structure 220 may be disengaged from the second gear 232 based on separation of the first wheel structure 220 from the second wheel structure 230 in the direction away from the first wheel structure 220. Therefore, when the first wheel structure 220 rotates clockwise or counterclockwise relative to the base member 210, the first gear 221 may not contact the second gear 232. In an embodiment, as the rib 243 of the third wheel structure 240 is positioned in the coupling groove 223 of the first wheel structure 220, the first wheel structure 220 may move toward the second wheel structure 230 due to an elastic restoring force of the elastic member 270. Accordingly, as the first gear 221 re-meshes with the second gear 232 of the second wheel structure 230, the first wheel structure 220 may be fixed by the second wheel structure 230.

In an embodiment, the second button member 260 may be positioned at least partially in the opening 231 of the second wheel structure 230. In an embodiment, the second button member 260 may contact the first wheel structure 220 within the opening 231 of the second wheel structure 230. In an embodiment, when the user presses the first button member 250, an external force applied by the user may be transmitted to the first wheel structure 220 through the protruding portion 251 of the first button member 250 and the second button member 260. For example, when the user presses the first button member 250 toward the opening 241 of the first wheel structure 220, the first wheel structure 220 may move downward relative to the second wheel structure 230 due to an external force transmitted through the protruding portion 251 of the first button member 250 and the second button member 260. In this case, the first gear 221 of the first wheel structure 220 may be disengaged from the second gear 232 of the second wheel structure 230. While the first button member 250 is pressed, the user may increase a distance between the rear band 140 and the front case 120 without rotating the third wheel structure 240. For example, when the first button member 250 is pressed, the first gear 221 of the first wheel structure 220 may be disengaged from the second gear 232 of the second wheel structure 230. Accordingly, the first wheel structure 220 may be rotatable. When the user moves the rear band 140 in a fourth direction (e.g., the fourth direction of FIG. 2A) relative to the back of the user's head to remove the head-mounted device 100, the winding portion 224 connected to the wire 150 may rotate clockwise or counterclockwise, and the first wheel structure 220 may rotate clockwise or counterclockwise accordingly. As the wire 150 is unwound from the winding portion 224 of the first wheel structure 220, the distance between the rear band 140 and the front case 120 may increase. Accordingly, after the distance between the rear band 140 and the front case 120 of the head-mounted device 100 has been adjusted to fit the user's head shape, the user may press the first button member 250 to increase the distance between the rear band 140 and the front case 120, thereby easily removing the head-mounted device 100 from the user's head.

According to an embodiment, as illustrated in FIG. 5B, the rib 243 of the third wheel structure 240 may include a body 244, and a first-1 inclined surface 2451 and a first-2 inclined surface 2452 inclined with respect to the body 244. In an embodiment, the first-1 inclined surface 2451 and the first-2 inclined surface 2452 may have different inclinations, but are not limited thereto. For example, the first-1 inclined surface 2451 and the first-2 inclined surface 2452 may have the same inclination with respect to the body 244.

In an embodiment, with reference to FIG. 5B, the coupling groove 223 of the first wheel structure 220 may have a shape corresponding to the rib 243. In an embodiment, the coupling groove 223 may include a second-1 inclined surface 2231 corresponding to the first-1 inclined surface 2451 of the rib 243 and a second-2 inclined surface 2232 corresponding to the first-2 inclined surface 2452 of the rib 243.

In an embodiment, with reference to FIG. 5B, the first-1 inclined surface 2451 may have a lower inclination than the first-2 inclined surface 2452 with respect to the body 244. The first-1 inclined surface 2451 may contact the second-1 inclined surface 2231 when the first wheel structure 220 rotates in a direction in which the wire 150 is wound around the first wheel structure 220 (e.g., counterclockwise). The first-2 inclined surface 2452 may contact the second-2 inclined surface 2232 when the first wheel structure 220 rotates in a direction in which the wire 150 is unwound from the first wheel structure 220 (e.g., clockwise).

In an embodiment, with reference to FIG. 5B, the first gear 221 of the first wheel structure 220 may include a third-1 inclined surface 2211 and a third-2 inclined surface 2212 inclined with respect to the surface 222 of the first wheel structure 220. In an embodiment, the third-1 inclined surface 2211 and the third-2 inclined surface 2212 may have different inclinations, but are not limited thereto. For example, the third-1 inclined surface 2211 and the third-2 inclined surface 2212 may have the same inclination with respect to the surface 222. In an embodiment, with reference to FIG. 5B, the third-1 inclined surface 2211 may have a lower inclination than the third-2 inclined surface 2212 with respect to the surface 222 of the first wheel structure 220.

In an embodiment, with reference to FIG. 5B, the inclined surface of the first gear 221 may be inclined at a greater angle than the inclined surface of the rib 243. In an embodiment, an angle θ formed between the third-1 inclined surface 2211 and the surface 222 of the first wheel structure 220 may be greater than an angle θ formed between the first-1 inclined surface 2451 and the body 244. In an embodiment, an angle formed between the third-2 inclined surface 2212 and the surface 222 of the first wheel structure 220 may be greater than an angle formed between the first-2 inclined surface 2452 and the body 244. Therefore, when the rib 243 of the third wheel structure 240 is positioned in the coupling groove 223 of the first wheel structure 220, the first gear 221 of the first wheel structure 220 and the second gear 232 of the second wheel structure 230 may remain engaged.

In an embodiment of the disclosure, the inclined surfaces 2211 and 2212 of the first gear 221 may be inclined at a greater angle than the inclined surfaces 2451 and 2452 of the rib 243. In this case, when the first wheel structure 220 is moved away from the second wheel structure 230 and rotated clockwise or counterclockwise via the third wheel structure 240, the first gear 221 and the second gear 232 may not mesh with each other. Accordingly, when the first wheel structure 220 rotates while engaging with the rib 243 of the third wheel structure 240, no contact occurs between the first gear 221 and the second gear 232, and thus the first wheel structure 220 may rotate with reduced noise or substantially without noise.

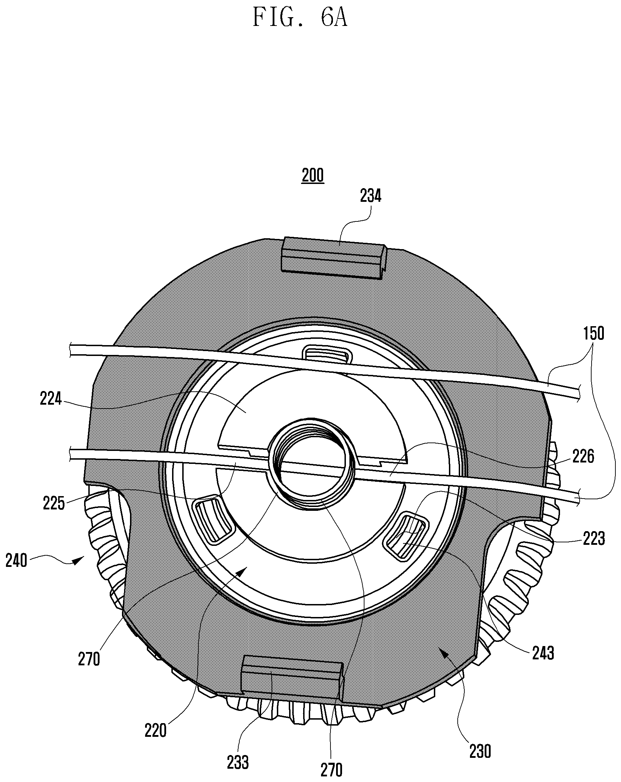

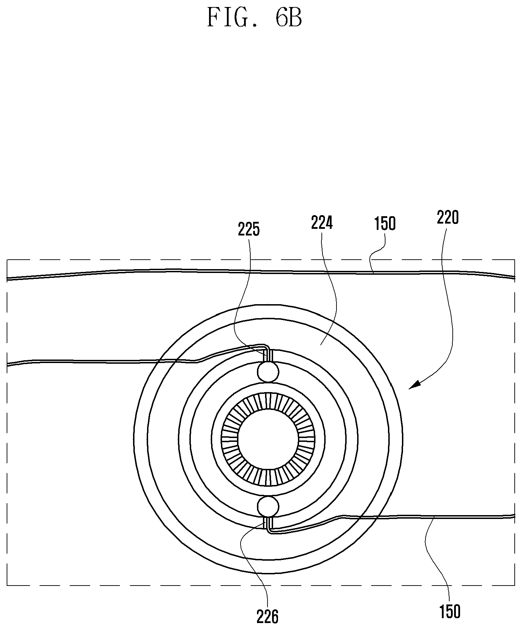

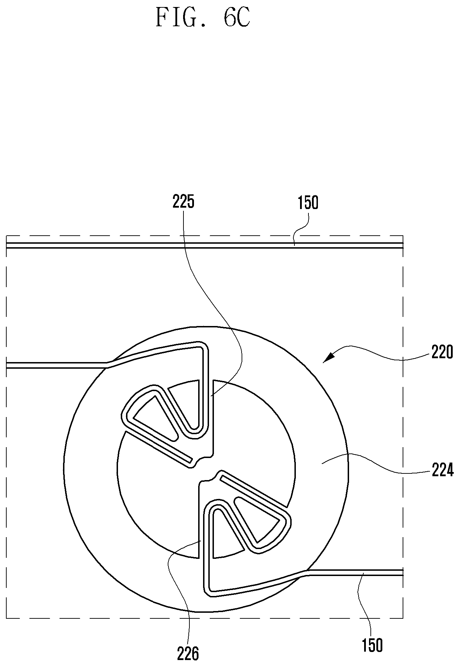

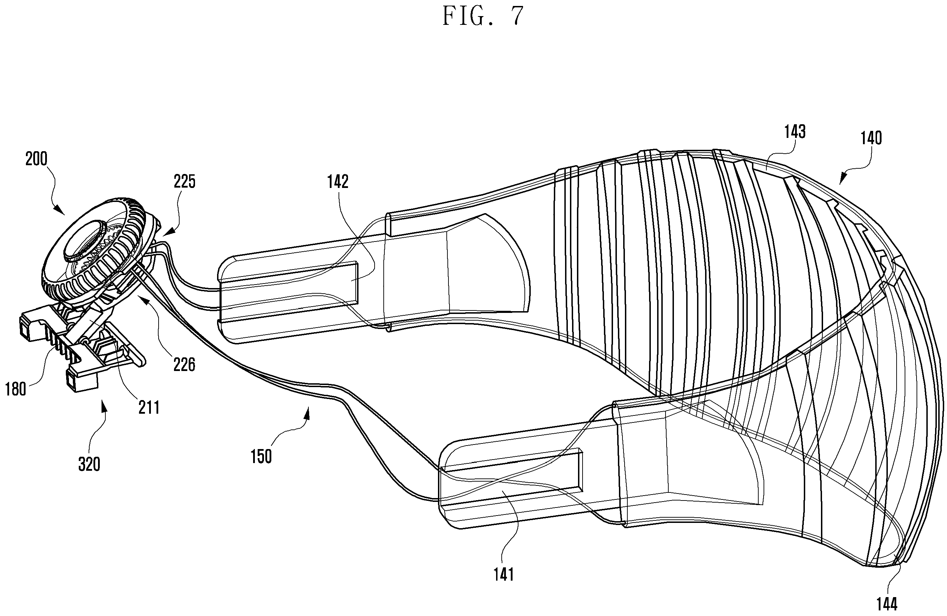

FIGS. 6A, 6B, and 6C are diagrams illustrating a connection relationship between a wire and a first wheel structure according to an embodiment of the disclosure. FIG. 7 is a diagram illustrating a dial unit and a rear band connected via a wire according to an embodiment of the disclosure.

According to an embodiment, as illustrated in FIGS. 6A, 6B, and 6C, the wire 150 may be connected to the winding portion 224 of the first wheel structure 220 in various forms. In an embodiment, the wire 150 needs to be fixed to both ends of the winding portion 224 so that the wire 150 may be wound around or unwound from the winding portion 224 based on rotation of the first wheel structure 220. In an embodiment, with reference to FIG. 6A, one strand of the wire 150 may sequentially pass through a first gate 225 formed at one end of the winding portion 224 and a second gate 226 formed at the other end thereof. In an embodiment, each gate may define a point at which the wire 150 is drawn into the interior of the winding portion 224. In an embodiment, with reference to FIG. 6B, the wire 150 may be respectively connected to the first gate 225 and the second gate 226 of the winding portion 224 of the first wheel structure 220. In an embodiment, with reference to FIG. 6C, the wire 150 may pass through the gates 225 and 226 formed at one end of the winding portion 224 and be fixed to the one end of the winding portion 224. Further, the wire 150 may pass through the gates 225 and 226 formed at the other end of the winding portion 224 and be fixed to the one end of the winding portion 224.

According to an embodiment, as illustrated in FIG. 7, strands of a plurality of different wires 150 may cross each other in at least one of the first side portion 141 or the second side portion 142. In an embodiment, a wire 150 extending from a first point (e.g., the first gate 225) of the dial unit 200 may extend to a second point (e.g., the second gate 226) of the dial unit 200 via the second side portion 142, the upper path 143 and the lower path 144 of the rear band 140, and the first side portion 141. In an embodiment, strands of different wires 150 may cross each other in at least one of the first side portion 141 or the second side portion 142. For example, a plurality of wire strands 150 extending from the first point of the dial unit 200 to the second side portion 142 may respectively pass through the upper path 143 and the lower path 144 of the rear band 140. Thereafter, the plurality of wire strands 150 may cross each other at the second side portion 142. The crossed plurality of wire strands 150 may extend to the second point of the dial unit 200. As the plurality of wire strands 150 cross at the second side portion 142, twisting or entanglement of the plurality of wire strands 150 may be prevented when the first wheel structure 220 rotates in conjunction with the third wheel structure 240.

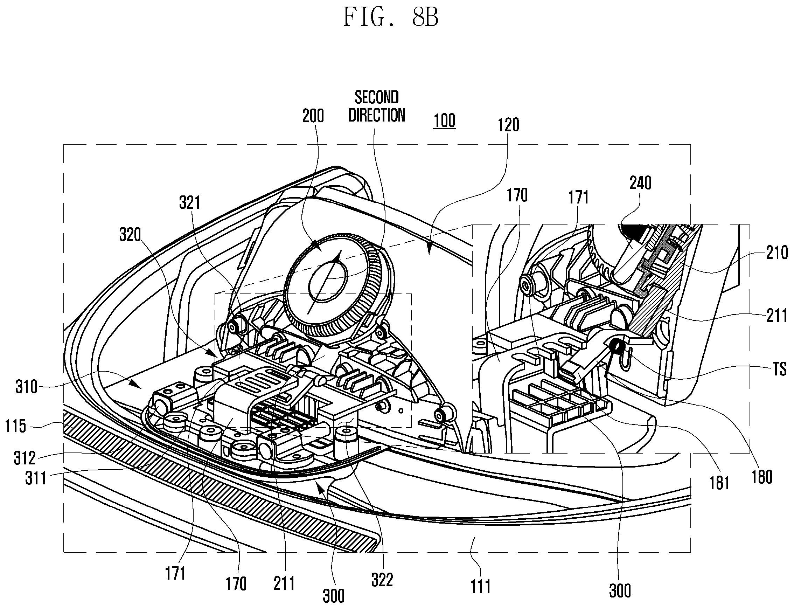

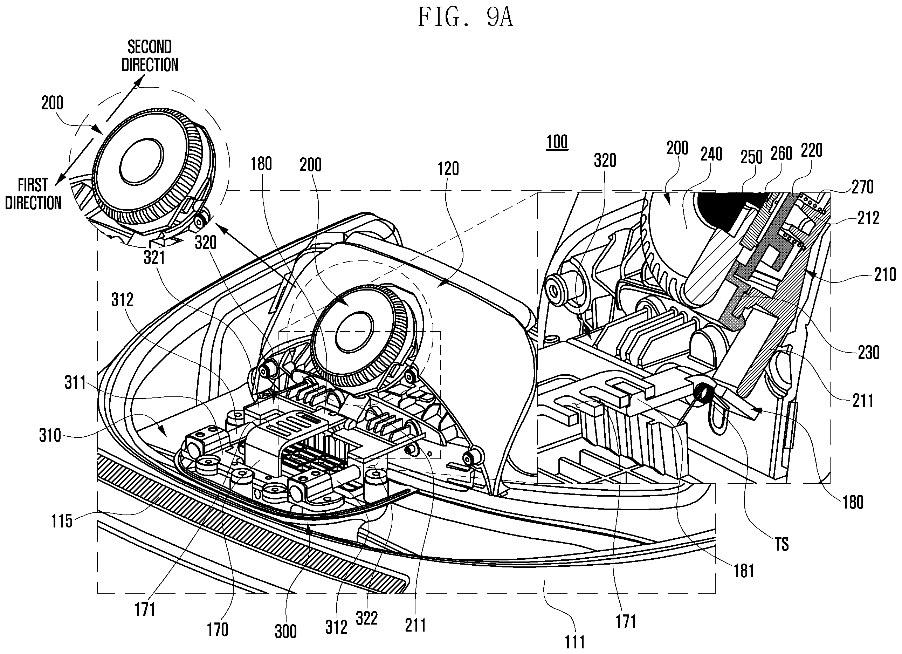

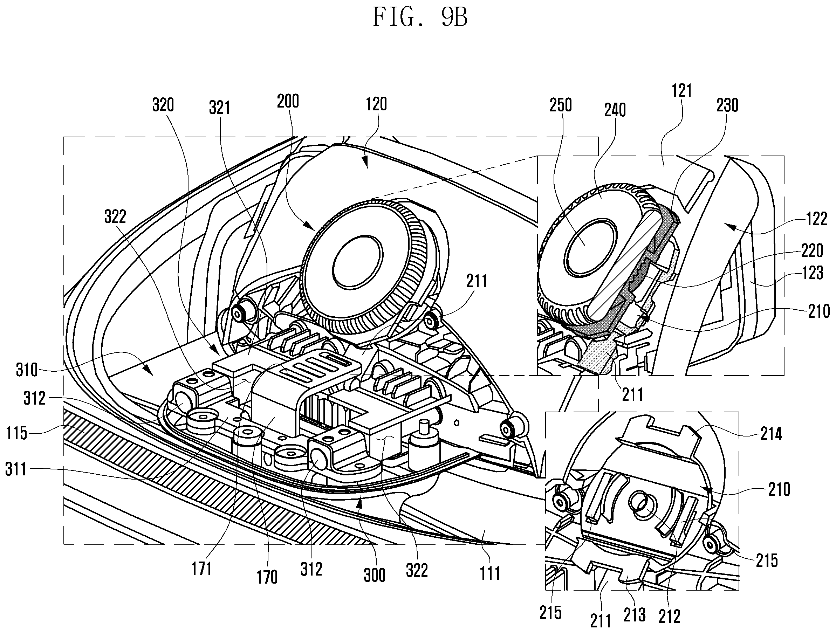

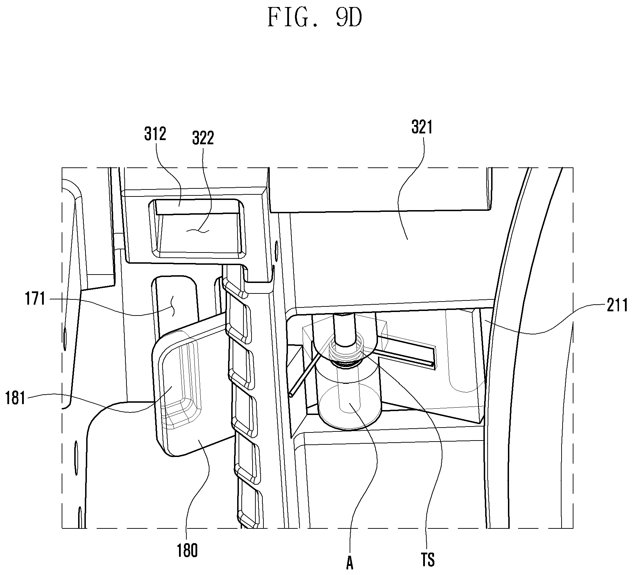

FIGS. 8A, 8B, 8C and 8D are diagrams illustrating movement of a main body relative to a front case in a state in which a dial unit moves in a second direction relative to the front case and fixing structures are disengaged according to an embodiment of the disclosure. FIGS. 9A, 9B, 9C, and 9D are diagrams illustrating a state in which a first fixing structure and a second fixing structure are engaged as a dial unit moves in a first direction (e.g., the first direction of FIG. 8C) according to an embodiment of the disclosure.

According to an embodiment, as illustrated in FIGS. 8A and 8B, the head-mounted device 100 may include a first guide unit 310 and a second guide unit 320. In an embodiment, the first guide unit 310 and the second guide unit 320 may be movably coupled. For example, the first guide unit 310 and the second guide unit 320 may move in a third direction (e.g., the third direction of FIG. 2A) or a fourth direction (e.g., the fourth direction of FIG. 2A).

In an embodiment, with reference to FIGS. 8A and 8B, the first guide unit 310 may include a first guide member 311 and a shaft 312. In an embodiment, the shaft 312 may be fixed to the first guide member 311. In an embodiment, at least a portion of the first guide unit 310 may be fixed to the main body 110. In an embodiment, the first guide member 311 may be directly coupled to the main body 110. In an embodiment, the first guide member 311 of the first guide unit 310 may be disposed on a support bracket 300. In an embodiment, the support bracket 300 may be fixed to the main body 110 as the support bracket 300 is received in a mounting groove (not illustrated) formed in the main body 110. Accordingly, the first guide member 311 may be fixed to the main body 110.

In an embodiment, with reference to FIGS. 8A and 8B, the second guide unit 320 may include a second guide member 321 and a guide groove 322. In an embodiment, the second guide groove 322 may be formed in the second guide member 321 and be sized to receive the shaft 312. In an embodiment, at least a portion of the second guide unit 320 may be fixed to the front case 120. For example, a portion of the second guide member 321 of the second guide unit 320 may be fixed to the front case 120.

In an embodiment, with reference to FIGS. 8A and 8B, the first guide unit 310 (e.g., the first guide member 311) and the second guide unit 320 (e.g., the second guide member 321) may be slidably coupled to allow sliding movement in a third direction or a fourth direction. The main body 110 may move in the third direction or the fourth direction relative to the front case 120 due to slidable coupling between the first guide unit 310 and the second guide unit 320. In an embodiment, from a perspective of a user wearing the head-mounted device 100, the second guide unit 320 may be fixed, and the first guide unit 310 may move in the third direction or the fourth direction relative to the second guide unit 320. Therefore, from the perspective of the user wearing the head-mounted device 100, the front case 120 may be fixed, and the main body 110 may move in the third direction or the fourth direction relative to the front case 120.

In an embodiment, the user may adjust a diopter by moving the main body 110 relative to the front case 120 to adjust a distance between a lens disposed in the main body 110 and the user's eye. In an embodiment, the front case 120 may remain fixed from the user's perspective, as the front case 120 supports the user's forehead. Therefore, even when the main body 110 is moved relative to the front case 120 to adjust the diopter, a distance between the front case 120 and the rear band 140 adjusted to fit the user's head may remain unchanged. According to an embodiment of the disclosure, a distance between the rear band 140 and the front case 120 may be adjusted to fit the user's head using a single dial unit 200, and the diopter may be adjusted by moving the main body 110 relative to the front case 120.

According to an embodiment, as illustrated in FIGS. 8A to 8D, the head-mounted device 100 may include a first fixing structure (e.g., a fixing portion 170) and a second fixing structure (e.g., a link member 180). In an embodiment, the main body 110 may be movable relative to the front case 120 according to whether the first fixing structure and the second fixing structure are engaged with each other. In an embodiment, when the first fixing structure and the second fixing structure are engaged, movement of the main body 110 in a third direction or a fourth direction relative to the front case 120 may be restricted. In summary, the main body 110 may be fixed in position relative to the front case 120. Conversely, when the first fixing structure and the second fixing structure are disengaged, the main body 110 may move in the third direction or the fourth direction relative to the front case 120.

In an embodiment, with reference to FIGS. 8A to 8D, the first fixing structure may be a fixing portion 170 disposed on the main body 110 and having a plurality of engagement grooves 171 formed therein. In an embodiment, the plurality of engagement grooves 171 may be disposed along an extending direction of the shaft 312 of the first guide unit 310. In an embodiment, the fixing portion 170 may be coupled to the support bracket 300 and/or the first guide member 311. In an embodiment, the second fixing structure may be a link member 180. In an embodiment, the link member 180 may include a stopper 181 inserted into the engagement groove 171 of the fixing portion 170. In an embodiment, the link member 180 may be inserted into an axis A formed on the second guide member 321 and rotatably coupled to the second guide member 321. In an embodiment, a compression member TS (e.g., torsion spring) may be inserted into the axis A of the second guide member 321. In an embodiment, with reference to FIG. 8D, one end of the compression member TS may contact the second guide member 321, and the other end may contact the link member 180. The compression member TS may be compressed when the stopper 181 of the link member 180 rotates toward the engagement groove 171 of the fixing portion 170. For example, as illustrated in FIG. 9D to be described below, as the dial unit 200 moves in a first direction relative to the front case 120, one end of the link member 180 may be pressed by the actuator 211, such that the stopper 181 located at the other end of the link member 180 may rotate toward the engagement groove 171 of the fixing portion 170. The compression member TS may be compressed as the stopper 181 rotates toward the fixing portion 170. Thereafter, as the dial unit 200 moves in a second direction (e.g., the second direction of FIG. 8C) relative to the front case 120, the link member 180 may rotate to an original position due to an elastic restoring force of the compression member TS. When the actuator 211 of the dial unit 200 moves in the second direction, the link member 180 may rotate counterclockwise with respect to FIG. 8C while remaining in contact with the actuator 211 due to the elastic restoring force.

In an embodiment, with reference to FIG. 9C described below, when the dial unit 200 moves in a first direction and the actuator 211 presses the link member 180 such that the stopper 181 is inserted into the engagement groove 171 of the fixing portion 170, movement of the first guide member 311 relative to the second guide member 321 may be restricted. For example, as the first guide member 311 is fixed relative to the second guide member 321, the main body 110 may be fixed in position relative to the front case 120. In an embodiment, with reference to FIG. 8C, when the dial unit 200 moves in a second direction and the stopper 181 of the link member 180 is disengaged from the engagement groove 171 of the fixing portion 170, the first guide member 311 may move in the third direction or the fourth direction relative to the second guide member 321. Accordingly, when the first fixing structure and the second fixing structure are disengaged, the user may adjust a diopter by moving the main body 110 relative to the front case 120 to adjust a distance between a lens disposed in the main body 110 and the user's eye.

In an embodiment, when the dial unit 200 moves in a first direction relative to the front case 120 and the stopper 181 of the link member 180 is inserted into the engagement groove 171 of the fixing portion 170, the dial unit 200 may be fixed to the front case 120 by engagement of the hook portion 215 of the dial unit 200 with the latch projection 160 positioned inside the front case 120. Thereafter, when the dial unit 200 is moved in a second direction relative to the front case 120 for diopter adjustment, the hook portion 215 of the dial unit 200 may be disengaged from the latch projection 160. As the dial unit 200 moves in the second direction, the link member 180 may rotate counterclockwise with respect to FIG. 8C. Accordingly, the stopper 181 of the link member 180 may be disengaged from the engagement groove 171 of the fixing portion 170. As engagement between the link member 180 and the fixing portion 170 is released, the main body 110 may become movable in the third direction or the fourth direction relative to the front case 120. The user may adjust the diopter by moving the main body 110 relative to the front case 120 to adjust a distance between a lens disposed in the main body 110 and the user's eye.

With reference to FIGS. 9A to 9D, the user may move the main body 110 relative to the front case 120 and then move the dial unit 200 in a first direction relative to the front case 120 to fix a position of the main body 110 relative to the front case 120. As the dial unit 200 moves in the first direction, the link member 180 may be pressed by the actuator 211 of the dial unit 200. In an embodiment, the link member 180 may rotate clockwise with respect to FIG. 9C as the link member 180 is pressed by the actuator 211 of the dial unit 200. The stopper 181 of the link member 180 may be engaged with the engagement groove 171 of the fixing portion 170 based on rotation of the link member 180. As the dial unit 200 moves in the first direction relative to the front case 120, the hook portion 215 of the dial unit 200 may engage with the latch projection 160. Therefore, the dial unit 200 may be fixed relative to the front case 120 in a state in which the stopper 181 of the link member 180 is inserted into the engagement groove 171 of the fixing portion 170. When the stopper 181 is engaged with the engagement groove 171 of the fixing portion 170, the first guide unit 310 may not move in the third direction or the fourth direction relative to the second guide unit 320. Therefore, after the diopter adjustment, the position of the main body 110 relative to the front case 120 may be fixed.

In an embodiment, with reference to FIGS. 9A to 9D, the stopper 181 of the link member 180 may be engaged with any one of the plurality of engagement grooves 171 of the fixing portion 170 based on the degree of movement of the main body 110 with respect to the front case 120. For example, with reference to FIG. 9A, when the main body 110 is moved to the maximum in the third direction relative to the front case 120, the stopper 181 of the link member 180 may be inserted into the engagement groove 171 that is closest to the front case 120 among the engagement grooves 171 of the fixing portion 170. In contrast, with reference to FIG. 9B, when the main body 110 is moved to the maximum in the fourth direction relative to the front case 120, the stopper 181 of the link member 180 may be inserted into the engagement groove 171 that is farthest from the front case 120 among the engagement grooves 171 of the fixing portion 170. As the dial unit 200 moves in the first direction relative to the front case 120, the hook portion 215 of the dial unit 200 may engage with the latch projection 160. Therefore, the dial unit 200 may be fixed relative to the front case 120 in a state in which the stopper 181 of the link member 180 is inserted into the engagement groove 171 of the fixing portion 170. When the stopper 181 is engaged with the engagement groove 171 of the fixing portion 170, the first guide unit 310 may not move in the third direction or the fourth direction relative to the second guide unit 320. Accordingly, the position of the main body 110 relative to the front case 120 may be fixed.

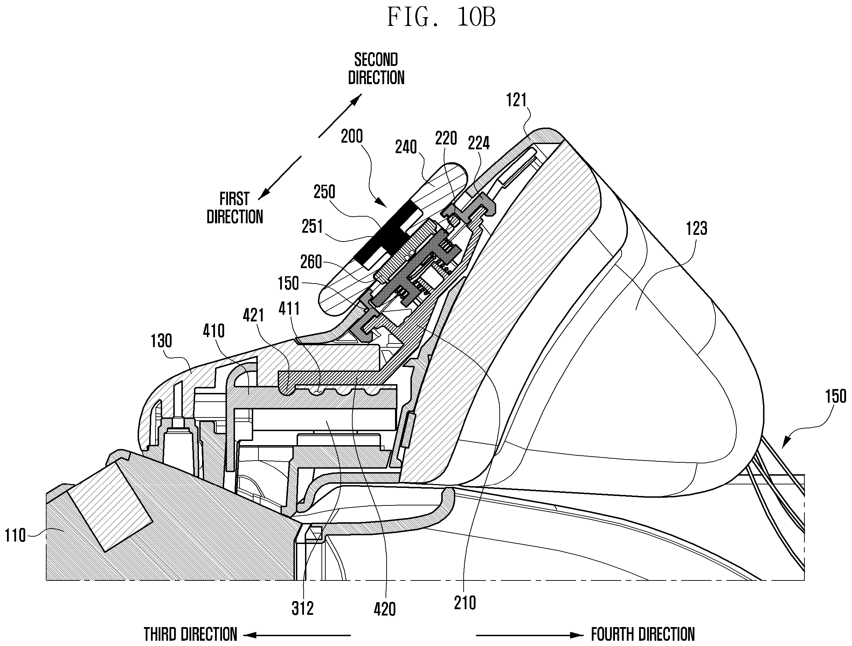

FIG. 10A is a diagram illustrating a state in which a main body may move relative to a front case as a protrusion formed on an actuator of a dial unit is disengaged from an engagement groove of a fixing plate according to an embodiment of the disclosure. FIG. 10B is a diagram illustrating a state in which a protrusion formed on an actuator of a dial unit is engaged with an engagement groove of a fixing plate according to an embodiment of the disclosure.

According to an embodiment, as illustrated in FIG. 10A, the main body 110 may be movable relative to the front case 120 according to whether a first fixing structure (e.g., a fixing plate 410) and a second fixing structure (e.g., a protrusion 421) are engaged with each other. In an embodiment, the first fixing structure may be a fixing plate 410 disposed on the main body 110. In an embodiment, the fixing plate 410 may include at least one engagement groove 411. In an embodiment, the engagement groove 411 of the fixing plate 410 may be disposed along an extension direction of the shaft 312 of the first guide unit 310. In an embodiment, the second fixing structure may be a part of the dial unit 200. In an embodiment, the second fixing structure may be formed on the base member 210 of the dial unit 200. In an embodiment, the base member 210 of the dial unit 200 may include an actuator 420 (e.g., the actuator 211 of FIG. 4A) that is parallel to one surface of the fixing plate 410 on which the engagement groove 411 is formed. In an embodiment, the actuator 420 may include a protrusion 421. In an embodiment, the protrusion 421 may be inserted into the engagement groove 411 of the fixing plate 410 based on movement of the dial unit 200 in a first direction (e.g., the first direction of FIG. 10A) or a second direction (e.g., the second direction of FIG. 10A) relative to the front case 120.

In an embodiment, with reference to FIGS. 10A and 10B, when the dial unit 200 moves in the first direction and the protrusion 421 of the actuator 420 is inserted into the engagement groove 411 of the fixing plate 410, movement of the first guide member 311 relative to the second guide member 321 may be restricted. For example, the main body 110 may be fixed relative to the front case 120 as the first guide member 311 is fixed relative to the second guide member 321. With reference to FIG. 10B, when the dial unit 200 moves in the second direction and the protrusion 421 of the actuator 420 is disengaged from the engagement groove 411 of the fixing plate 410, the first guide member 311 may move relative to the second guide member 321 in a third direction (e.g., the third direction of FIG. 10A) or a fourth direction (e.g., the fourth direction of FIG. 10B). Accordingly, when coupling between the fixing plate 410 and the protrusion 421 of the actuator 420 is released, the user may adjust the diopter by moving the main body 110 relative to the front case 120 to adjust a distance between the lens disposed on the main body 110 and an eye of the user. The user may move the dial unit 200 in the first direction relative to the front case 120 in a state in which the diopter is optimally adjusted. As the dial unit 200 moves in the first direction, the protrusion 421 of the actuator 420 may be inserted into the engagement groove 411 of the fixing plate 410. As the dial unit 200 moves in the first direction relative to the front case 120, the hook portion 215 of the dial unit 200 may be engaged with the latch projection 160. Therefore, the dial unit 200 may be fixed to the front case 120 in a state in which the protrusion 421 of the actuator 420 is inserted into the engagement groove 411 of the fixing plate 410. When the protrusion 421 of the actuator 420 is engaged with the engagement groove 411 of the fixing plate 410, the first guide unit 310 may be restricted from moving relative to the second guide unit 320 in the third direction or the fourth direction. Therefore, after adjustment of diopter, the position of the main body 110 relative to the front case 120 may be fixed.

In an embodiment, after the user wears the head-mounted device 100, even when the second fixing structure is disengaged from the first fixing structure by moving the dial unit 200 in the second direction in order to adjust the diopter, a distance between the front case 120 and the rear band 140 remain unchanged, thereby allowing the diopter to be adjusted while a wearing state is maintained.

In an embodiment, with reference to FIGS. 10A and 10B, the protrusion 421 of the actuator 420 may be engaged with one of a plurality of engagement grooves 411 of the fixing plate 410 based on an amount of movement of the main body 110 relative to the front case 120. For example, when the main body 110 is moved to the maximum in the third direction relative to the front case 120, the protrusion 421 of the actuator 420 may be inserted into the engagement groove 411 that is closest to the front case 120 among the engagement groove 411 of the fixing plate 410. Conversely, when the main body 110 is moved to the maximum in the fourth direction relative to the front case 120, the protrusion 421 of the actuator 420 may be inserted into the engagement groove 411 that is farthest from the front case 120 among the engagement grooves 411 of the fixing plate 410.

According to an embodiment disclosed in this document, both the diopter and a length of the rear band 140 relative to the front case 120 may be adjusted using a single dial unit 200. According to an embodiment, in a state in which the length of the rear band 140 relative to the front case 120 is adjusted through the dial unit 200, even if the main body 110 is moved relative to the front case 120 in a state in which the dial unit 200 is moved in a second direction relative to the front case 120 for diopter adjustment, a distance between the front case 120 and the rear band 140 may remain unchanged. Therefore, the user may stably wear the head-mounted device 100 during the diopter adjustment process.

Further, according to an embodiment of the disclosure, a cushion portion 123 of the front case 120 may include a plurality of portions. For example, the cushion portion 123 may include a first cushion portion 1231 positioned at a center portion of the user's forehead, and a second cushion portion 1232 and a third cushion portion 1233 disposed on opposite sides of the first cushion portion 1231. The plurality of cushion portions 123 may move relative to one another according to the user's head shape. Therefore, the user may more comfortably wear the head-mounted device 100.

According to an embodiment of the disclosure, a head-mounted device 100 may include a main body 110; a front case 120 movably coupled to the main body; a dial unit 200 disposed on the front case; a first fixing structure disposed on the main body (e.g., the fixing portion 170 of FIG. 8A, the fixing plate 410 of FIG. 10A); a second fixing structure (e.g., the stopper 181 of FIG. 8C, the protrusion 421 of FIG. 10A) configured to engage with the first fixing structure based on movement of the dial unit in a first direction and to disengage from the first fixing structure based on movement of the dial unit in a second direction; a wire 150 wound around the dial unit; and a rear band 140 connected to the wire and configured to move relative to the front case based on rotation of the dial unit, wherein the main body may move relative to the front case in one of a third direction and a fourth direction opposite to the third direction in a state in which the second fixing structure is disengaged from the first fixing structure.

Further, the head-mounted device may further include a latch projection 160 formed on the front case and configured to face the dial unit, wherein the dial unit may include a hook portion 215 engaged with the latch projection as the dial unit moves in the first direction relative to the front case and disengaged from the latch projection as the dial unit moves in the second direction relative to the front case.

Further, the hook portion may include an inclined surface 216 configured to contact with the latch projection and inclined at a predetermined angle.

Further, the head-mounted device 100 may further include a first guide unit 310 having at least a portion fixed to the main body, and a second guide unit 320 having at least a portion fixed to the front case and movably coupled to the first guide unit.

Further, the head-mounted device 100 may further include a shaft 312 configured to guide movement of the first guide unit relative to the second guide unit and disposed in one of the first guide unit and the second guide unit; and a guide groove 322 configured to receive the shaft and formed in the other of the first guide unit and the second guide unit.

Further, the first fixing structure may include a fixing portion 170 including at least one engagement groove 171 and disposed on the first guide unit, the second fixing structure may include a link member 180 disposed on the second guide unit, configured to contact an actuator 211 formed on the dial unit and rotate relative to the front case, and including a stopper 181 configured to engage with the engagement groove, wherein the link member may be pressed by the actuator based on movement of the dial unit in the first direction such that the stopper may engage with the engagement groove of the fixing portion, and the stopper may be disengaged from the engagement groove of the fixing portion based on movement of the dial unit in the second direction.

Further, the first fixing structure may include a fixing plate 410 including at least one engagement groove and disposed on the main body, and the second fixing structure may include a protrusion 421 formed on the dial unit and inserted into the engagement groove, and the protrusion may be inserted into the engagement groove of the fixing plate based on movement of the dial unit in the first direction and be disengaged from the engagement groove of the fixing plate based on movement of the dial unit in the second direction.

Further, the dial unit may include an actuator 420 parallel to one surface of the fixing plate in which the engagement groove is formed and on which the protrusion is formed.

Further, the dial unit may include a base member 210; a first wheel structure 220 disposed on an upper end of the base member and including a first gear 221 and a coupling groove 223; an elastic member 270 disposed between the base member and the first wheel structure; a second wheel structure 230 engaged with the base member and including a second gear 232 meshed with the first gear; and a third wheel structure 240 disposed on an upper end of the second wheel structure and including a rib 243 corresponding to the coupling groove, wherein the first gear of the first wheel structure may be meshed with the second gear of the second wheel structure in a state in which the rib of the third wheel structure is inserted into the coupling groove, and as one surface 222 of the first wheel structure is pressed by the rib based on rotation of the third wheel structure, the first gear may be spaced apart from the second gear.

Further, the second wheel structure may include an opening 231 in which a portion of the first wheel structure is received, and the second gear of the second wheel structure may be formed along an outer periphery of the opening.

Further, the dial unit may include a first button member 250 including a protruding portion 251 passing through a hole 242 formed in the third wheel structure; and a second button member 260 configured to face the protruding portion, disposed in the opening of the second wheel structure, and configured to contact the first wheel structure.

Further, the rib of the third wheel structure may include a body 244, and a first-1 inclined surface 2451 and a first-2 inclined surface 2452 inclined at different angles relative to the body, and the coupling groove of the first wheel structure may include a second-1 inclined surface 2231 configured to contact the first-1 inclined surface of the rib and a second-2 inclined surface 2232 configured to contact the first-2 inclined surface of the rib.

Further, the first gear of the first wheel structure may include a third-1 inclined surface 2211 inclined at an angle different from that of one surface of the first wheel structure and inclined at a greater angle than the first-1 inclined surface; and a third-2 inclined surface 2212 inclined at a greater angle than the first-2 inclined surface, and the second gear of the second wheel structure may include a fourth-1 inclined surface configured to engage with the third-1 inclined surface and a fourth-2 inclined surface configured to engage with the third-2 inclined surface.

Further, the first wheel structure may include a winding portion 224 around which the wire is wound.

Further, the winding portion may include a pair of gates 225 and 226 configured to connect an interior and an exterior thereof and through which the wire passes.

Further, the rear band may include a first side portion 141 and a second side portion 142 each coupled to the main body, an upper path 143 in which the wire is disposed, and a lower path 144 in which the wire is disposed.

Further, the wire may extend from the first side portion to the second side portion through the upper path, and extend from the first side portion to the second side portion through the lower path, and the wire may cross in one of the first side portion and the second side portion.

Further, the front case may include cushion portions 1231, 1232, and 1233 configured to contact the user's face and divided into at least three areas.

According to an embodiment of the disclosure, a fastening structure of the main body 110 and the front case 120 may include a dial unit 200 disposed on the front case and including a hook portion 215; a latch projection 160 disposed on the front case and engaged with the hook portion as the dial unit moves in a first direction relative to the front case and disengaged from the hook portion as the dial unit moves in a second direction relative to the front case; a first fixing structure 170 or 410 disposed on the main body (e.g., the fixing portion 170 of FIG. 8A, the fixing plate 410 of FIG. 10A); and a second fixing structure 180 or 421 (e.g., the stopper 181 of FIG. 8C, the protrusion 421 of FIG. 10A) engaged with the first fixing structure based on movement of the dial unit in the first direction and disengaged from the first fixing structure based on movement of the dial unit in the second direction.

Further, the head-mounted device 100 may further include a first guide unit 310 having at least a portion fixed to the main body, a second guide unit 320 having at least a portion fixed to the front case and movably coupled to the first guide unit, a shaft 312 configured to guide movement of the first guide unit with respect to the second guide unit and disposed in one of the first guide unit and the second guide unit, and a guide groove 322 inserted into the shaft and disposed in the other of the first guide unit and the second guide unit.

It should be understood that various embodiments of this document and terms used therein are not intended to limit the technical features described in this document to specific embodiments, but include various modifications, equivalents, or substitutions of the embodiments. In connection with the description of the drawings, like reference numerals may be used for similar or related components. The singular form of the noun corresponding to the item may include one or more of the item, unless the relevant context clearly dictates otherwise. In this document, each of phrases such as "A or B", "at least one of A and B", "at least one of A or B", "A, B, or C", "at least one of A, B, and C", and "at least one of A, B, or C" may include any one of or all possible combinations of items listed together in the corresponding one of the phrases. Terms such as "first" or "second" may be simply used for distinguishing a corresponding component from other corresponding components, and do not limit the corresponding components in other aspects (e.g., importance or order). In the case that one (e.g., first) component is referred to as "coupled" or "connected" to another (e.g., second) component, with or without the terms "functionally" or "communicatively", it means that the one component may be connected to the other component directly (e.g., by wire), wirelessly, or through a third component.

According to various embodiments, each component (e.g., module or program) of the above-described components may include one or more entities, and some of the entities may be separated and disposed in other components. According to various embodiments, one or more of the above-described components or operations may be omitted, or one or more other components or operations may be added. Alternatively or additionally, a plurality of components (e.g., modules or programs) may be integrated into a single component. In such a case, the integrated component may perform one or more functions of each of the plurality of components in the same or similar manner as performed by the corresponding component prior to integration. According to various embodiments, operations performed by a module, a program, or another component may be executed sequentially, in parallel, repeatedly, or heuristically, or one or more of the operations may be executed in a different order, omitted, or one or more other operations may be added.

It will be understood that the disclosure contemplates and includes, in addition to the above-disclosed embodiments, embodiments based on combinations of any two or more of the above-disclosed embodiments and embodiments including any combination of the above features. That is, the absence of explicit indication that two features may be combined or two embodiments may be combined does not mean that such combinations are not contemplated, but such combinations should be regarded as included herein.

## Claims

1. A head-mounted device 100, comprising:
a main body 110;
a front case 120 movably coupled to the main body;
a dial unit 200 disposed on the front case;
a first fixing structure 170 or 410 disposed on the main body;
a second fixing structure 180 or 421 configured to engage with the first fixing structure based on movement of the dial unit in a first direction and to disengage from the first fixing structure based on movement of the dial unit in a second direction;
a wire 150 wound around the dial unit; and
a rear band 140 connected to the wire and configured to move relative to the front case based on rotation of the dial unit,
wherein the main body is configured to move relative to the front case in one of a third direction and a fourth direction opposite to the third direction in a state in which the second fixing structure is disengaged from the first fixing structure.

2. The head-mounted device of claim 1, further comprising a latch projection 160 formed on the front case and configured to face the dial unit,
wherein the dial unit comprises a hook portion 215 engaged with the latch projection as the dial unit moves in the first direction relative to the front case and disengaged from the latch projection as the dial unit moves in the second direction relative to the front case.

3. The head-mounted device of claim 2, wherein the hook portion comprises an inclined surface 216 configured to contact with the latch projection and inclined at a predetermined angle.

4. The head-mounted device of claim 1, further comprising:
a first guide unit 310 having at least a portion fixed to the main body; and
a second guide unit 320 having at least a portion fixed to the front case and movably coupled to the first guide unit.

5. The head-mounted device of claim 4, further comprising:
a shaft 312 configured to guide movement of the first guide unit relative to the second guide unit and disposed in one of the first guide unit and the second guide unit; and
a guide groove 322 configured to receive the shaft and formed in the other of the first guide unit and the second guide unit.

6. The head-mounted device of claim 4, wherein the first fixing structure comprises a fixing portion 170 including at least one engagement groove 171 and disposed on the first guide unit, and
the second fixing structure comprises a link member 180 disposed on the second guide unit and configured to contact an actuator 211 formed on the dial unit and rotate relative to the front case, and including a stopper 181 configured to engage with the engagement groove;
the link member is pressed by the actuator based on movement of the dial unit in the first direction such that the stopper engages with the engagement groove of the fixing portion, and
the stopper is disengaged from the engagement groove of the fixing portion based on movement of the dial unit in the second direction.

7. The head-mounted device of claim 1, wherein the first fixing structure comprises a fixing plate 410 including at least one engagement groove and disposed on the main body,
the second fixing structure comprises a protrusion 421 formed on the dial unit and inserted into the engagement groove,
the protrusion is inserted into the engagement groove of the fixing plate based on movement of the dial unit in the first direction, and is disengaged from the engagement groove of the fixing plate based on movement of the dial unit in the second direction.

8. The head-mounted device of claim 7, wherein the dial unit comprises an actuator 420 parallel to one surface of the fixing plate in which the engagement groove is formed and on which the protrusion is formed.

9. The head-mounted device of claim 1, wherein the dial unit comprises:
a base member 210;
a first wheel structure 220 disposed on an upper end of the base member and including a first gear 221 and a coupling groove 223;
an elastic member 270 disposed between the base member and the first wheel structure;
a second wheel structure 230 engaged with the base member and including a second gear 232 meshed with the first gear; and
a third wheel structure 240 disposed on an upper end of the second wheel structure and including a rib 243 corresponding to the coupling groove,
wherein the first gear of the first wheel structure is meshed with the second gear of the second wheel structure in a state in which the rib of the third wheel structure is inserted into the coupling groove, and
the first gear is spaced apart from the second gear as one surface 222 of the first wheel structure is pressed by the rib based on rotation of the third wheel structure.

10. The head-mounted device of claim 9, wherein the second wheel structure comprises an opening 231 in which a portion of the first wheel structure is received, and
the second gear of the second wheel structure is formed along an outer periphery of the opening.

11. The head-mounted device of claim 10, wherein the dial unit comprises:
a first button member 250 including a protruding portion 251 passing through a hole 242 formed in the third wheel structure; and
a second button member 260 configured to face the protruding portion, disposed in the opening of the second wheel structure, and configured to contact the first wheel structure.

12. The head-mounted device of claim 9, wherein the rib of the third wheel structure comprises:
a body 244, and a first-1 inclined surface 2451 and a first-2 inclined surface 2452 inclined at different angles relative to the body, and
the coupling groove of the first wheel structure comprises a second-1 inclined surface 2231 configured to contact the first-1 inclined surface of the rib and a second-2 inclined surface 2232 configured to contact the first-2 inclined surface of the rib.

13. The head-mounted device of claim 12, wherein the first gear of the first wheel structure comprises a third-1 inclined surface 2211 inclined at an angle different from that of one surface of the first wheel structure and inclined at a greater angle than the first-1 inclined surface; and a third-2 inclined surface 2212 inclined at a greater angle than the first-2 inclined surface, and
the second gear of the second wheel structure comprises a fourth-1 inclined surface configured to engage with the third-1 inclined surface and a fourth-2 inclined surface configured to engage with the third-2 inclined surface.

14. The head-mounted device of claim 9, wherein the first wheel structure comprises a winding portion 224 around which the wire is wound, and
the winding portion comprises a pair of gates 225 and 226 configured to connect an interior and an exterior thereof and through which the wire passes.

15. The head-mounted device of claim 14, wherein the rear band comprises a first side portion 141 and a second side portion 142 each coupled to the main body, an upper path 143 in which the wire is disposed, and a lower path 144 in which the wire is disposed, and
the wire is configured to extend from the first side portion to the second side portion through the upper path and extend from the first side portion to the second side portion through the lower path, wherein the wire is configured to cross in one of the first side portion and the second side portion.
